# EUROPÄISCHE PATENTSCHRIFT

(11) **EP 2 414 415 B1**
(45) Veröffentlichungstag und Bekanntmachung des Hinweises auf die Patenterteilung: **27.11.2013**
(21) Anmeldenummer: 10711011.6
(22) Anmeldetag: 23.03.2010
(51) Int. Cl.: C08G 18/08, C08G 18/28, C08G 18/70, C09D 175/04

(54) **NEUE WÄSSRIGE 2K PUR-BESCHICHTUNGSSYSTEME FÜR VERBESSERTEN KORROSIONSSCHUTZ**
New aqueous 2K PUR coating system for improved corrosion protection
Nouveaux systèmes de revêtement 2K PUR aqueux pour une protection contre la corrosion améliorée

(30) Priorität: 31.03.2009 EP 09004654
(43) Veröffentlichungstag der Anmeldung: 08.02.2012
(73) Patentinhaber: Bayer Intellectual Property GmbH, 40789 Monheim (DE)
(72) Erfinder: NENNEMANN, Arno, 51469 Bergisch Gladbach (DE); PYRLIK, Oliver, 51379 Leverkusen (DE); LAAS, Hans-Josef, 51519 Odenthal (DE); IMÖHL, Carmen, 42697 Solingen (DE); MALEIKA, Robert, 40589 Düsseldorf (DE)
(74) Vertreter: BIP Patents
(86) Internationale Anmeldenummer: PCT/EP2010/001805
(87) Internationale Veröffentlichungsnummer: WO 2010/112155

(56) Entgegenhaltungen:
- EP-A1- 1 923 412
- WO-A1-01/88006

## Beschreibung

Die Erfindung betrifft neue wäßrige Zweikomponenten-Beschichtungsmittel auf Basis von hydroxy- und/oder aminofunktionellen wasserverdünnbaren Harzen und nanopartikelmodifizierten isocyanatfunktionellen Härtern, ein Verfahren zu deren Herstellung und deren Verwendung in Lacken, Beschichtungen und Dichtmassen insbesondere für Korrosionsschutzanwendungen.

Zweikomponenten-Polyurethanlacke haben aufgrund ihrer hervorragenden Eigenschaften eine große Bedeutung auf dem Beschichtungssektor erlangt. Von Nachteil ist, daß zur Verarbeitung in den meisten Fällen größere Mengen organischer Lösemittel erforderlich sind. In nahezu allen Anwendungsbereichen werden jedoch verstärkt festkörperreiche oder vor allem auch wasserverdünnbare Beschichtungsmittel gefordert, um die Lösemittelemissionen und die damit verbundene Umweltbelastung so gering wie möglich zu halten.

Die Verwendung von Wasser als Lösungsmittel für Zweikomponenten-Polyurethanlacke schien bis vor einigen Jahren nicht ohne weiteres möglich, weil Isocyanatgruppen nicht nur mit den Hydroxylgruppen des Harzes zu Urethanen sondern auch mit Wasser unter Harnstoff- und Kohlendioxidbildung abreagieren können. Hierdurch werden in der Regel die Verarbeitungszeit, die Applikationssicherheit, die Erzielung ausreichender blasenfreier Schichtstärken und die Beständigkeitseigenschaften der Lacke und Beschichtungen auf nicht mehr praxisgerechte Werte verschlechtert.

In den letzten Jahren wurden jedoch verstärkt Anstrengungen unternommen, um diese Probleme zu reduzieren. Eine erste Lösungsmöglichkeit wird in der EP-A 358 979 beschrieben, in der ausgewählte Polyhydroxypolyacrylat-Sekundärdispersionen mit Polyisocyanaten, die freie Isocyanatgruppen aufweisen, zu wäßrigen Zweikomponentensystemen kombiniert werden.

Mittlerweile konnte gezeigt werden, daß sich dieses Prinzip auch auf andere hydroxyfunktionelle Harzdispersionen übertragen läßt und auf diese Weise die Eigenschaften der Lacke variiert werden können. Zum Beispiel beschreibt die EP-A 557 844 Zweikomponenten-Polyurethanbeschichtungen auf Basis von hydroxyfunktionellen Polyacrylat-Primärdispersionen, die EP-A 543 228 solche auf Basis von Polyester-Polyacrylat-Hybriddispersionen, die EP-A 741 176 solche auf Basis fremdemulgierter Alkydharze, die EP-A 496 205 solche auf Basis von urethanmodifizierten Polyesterdispersionen oder die EP-A 542 105 solche auf Basis von Mischungen verschiedener Harztypen.

Als Polyisocyanatkomponente können in den wäßrigen Zweikomponenten-Polyurethansystemen sowohl hydrophobe als auch hydrophile, selbstemulgierende Polyisocyanate verwendet werden. Während die Verwendung von niedrigviskosen hydrophoben Polyisocyanaten zu Beschichtungen höchster Beständigkeiten führen, besitzen hydrophile Vernetzer, beispielsweise durch Umsetzung mit Polyetheralkoholen hydrophil modifierte Polyisocyanate, wie sie in EP-A 0 206 059, EP-A 0 540 985 oder US-P 5 200 489 beschrieben sind, oder sulfonatgruppenhaltige Polyisocyanate der in WO 01/88006 genannten Art Vorteile hinsichtlich Dispergierbarkeit und Applikationssicherheit.

Aus DE 10 2006 054289 und EP 07021690.2 sind kolloidal stabile, transparente bzw. transluzente nanopartikelhaltige Polyisocyanate bekannt, welche durch Modifizierung von Polyisocyanaten mit Aminoalkoxysilanen bzw. Aminoalkoxysilanen und Polydimethylsiloxanen und Zugabe von Nanopartikeln erhalten werden. Nicht beschrieben sind jedoch hydrophile Polyisocyanate für den Einsatz in wässrigen Dispersionen. Ebenfalls nicht beschrieben ist der Einsatz in wässrigen Beschichtungsmitteln für Korrosionsschutzanwendungen.

Generell ist in wässrigen Polyurethanbeschichtungen ein guter Korrosionsschutz schwer zu erreichen, da aufgrund der systemimmanent hohen Hydrophilie der Beschichtungrohstoffe Wassersowie Elektrolyttransport und damit Korrosion gefördert wird.

Die Aufgabe der Erfindung bestand nun darin, neue wäßrige Zweikomponenten-Polyurethanbeschichtungen mit verbessertem Korrosionsschutz bei hoher Applikationssicherheit zur Verfügung zu stellen. Diese neuen Beschichtungssysteme sollten insbesondere für die Anwendung in den Bereichen Autoreparatur-, Großfahrzeug- und allgemeine Industrielackierung geeignet sein. Sie können als ggf. pigmentierte Grundierungen / Primer / Haftvermittler, Füller, Decklacke und auch als Klarlacke eingesetzt werden.

Diese Aufgabe konnte überraschenderweise mit der Bereitstellung der nachfolgend näher beschriebenen Beschichtungsmittel auf Basis von hydroxy- und/oder aminofunktionellen wasserverdünnbaren Harzen und nanopartikelmodifizierten isocyanatfunktionellen Härtern bzw. des Verfahrens zur Herstellung dieser Beschichtungsmittel gelöst werden.

Gegenstand der vorliegenden Erfindung sind Beschichtungsmittel umfassend
A) 10 bis 90 Gew.-% einer wäßrigen, hydroxy- und/oder aminofunktionellen Harzdispersion,
B) 10 bis 90 Gew.-% eines nanopartikelmodifizierten Polyisocyanates und
C) 0 bis 60 Gew.-% weiteren, in der Lacktechnologie bekannten Hilfs- und Zusatzmittel,
wobei die Prozentangaben auf Festkörper der Gesamtzusammensetzung bezogen sind.

Gegenstand der Erfindung ist auch ein Verfahren zur Herstellung dieser wässrigen Beschichtungsmittel und deren Verwendung in Lacken, Beschichtungen, Grundierungen und Dichtmassen, insbesondere für Korrosionsschutzanwendungen.

Als Komponente A) können in den erfindungsgemäßen Beschichtungsmitteln sämtliche in der wäßrigen Zweikomponenten-Polyurethanbeschichtungstechnologie üblichen Harzdispersionen eingesetzt werden. Derartige Harzdispersionen und die Verfahren zur ihrer Herstellung sind bekannt. Es handelt sich beispielsweise um die üblichen wäßrigen oder in Wasser dispergierbaren Polyesterharze, Polyacrylatharze, Polyurethanharze, Polyharnstoffharze, Polycarbonatharze oder Polyetherharze, wie sie beispielsweise in EP-A 358 979, EP-A 469 389, EP-A 496 205, EP-A 557 844, EP-A 583 728, WO 94/03511, WO 94/20559, WO 94/28043 oder WO 95/02005 beschrieben sind. Auch der Einsatz von beliebigen Hybriddispersionen oder beliebigen Mischungen verschiedener Dispersionen ist möglich.

Geeignete sekundäre, hydroxyfunktionelle Polyacrylat-Dispersionen A1) werden erhalten durch Copolymerisation ungesättigter Verbindungen (Monomeren) in Lösemitteln, Neutralisation eingebauter potentiell ionischer Gruppen und Dispergieren in Wasser.

Zur Herstellung von sekundären Polyacrylat-Dispersionen A1) geeignete Monomere sind z.B. carboxyfunktionelle radikalisch polymerisierbaren Monomere wie z.B. Acrylsäure, Methacrylsäure, β-Carboxyethylacrylat, Crotonsäure, Fumarsäure, Maleinsäure(anhydrid), Itaconsäure oder Monoalkylester zweibasiger Säuren bzw. Anhydride wie z.B. Maleinsäuremonoalkylester. Bevorzugt werden Acrylsäure oder Methacrylsäure eingesetzt

Geeignete nichtfunktionelle Monomere sind Cyclohexyl(meth)acrylat, mit Alkylgruppen am Ring substituierte Cyclohexyl(meth)acrylate, 4-tert.-Butycyclohexyl(meth)acrylat, Norbornyl(meth)acrylat, Isoborny(meth)acrylat, (Meth)acrylsäureester mit C1-C18-Kohlenwasserstoffresten im Alkoholteil, beispielsweise Etylacrylat, Ethylmethacrylat, n-Butylacrylat, n-Butylmethacrylat, iso-Butylacrylat, iso-Butylmethacrylat, 2-Ethylhexylacrylat, Methylmethacrylat, 2-Ethylhexylmethacrylat, tert.-Butylacrylat, Stearylacrylat, Stearylmethacrylat, Norbornylacrylat und/oder Norbornylmethacrylat.

Geeignete hydroxyfunktionelle Monomere sind z.B. OH-funktionelle (Meth)acrylsäureester mit C1-C18-Kohlenwasserstoffresten im Alkoholteil, wie beispielsweise Hydroxyethylmethacrylat, Hydroxypropylmethacrylat, Hydroxyethylacrylat, Hydroxypropylacrylat, Hydroxybutylacrylat oder Hydroxybutylmethacrylat.

Ebenfalls geeignet sind Alkylenoxideinheiten enthaltende Hydroxymonomere, wie z.B. Additionspro-dukte von Ethylenoxid, Propylenoxid oder Butylenoxid an (Meth)acrylsäure. Bevorzugt ist Hydroxyethylmethacrylat und/oder Hydroxypropylmethacrylat.

Ebenfalls geeignet sind Styrol, Vinyltoluol, α-Methylstyrol, Vinylester; Alkylenoxideinheiten enthaltende Vinylmonomere, wie z.B. Kondensationsprodukte von (Meth)acrylsäure mit Oligoalkylenoxidmonoalkylethern sowie gegebenenfalls Monomere mit weiteren funktionellen Gruppen, wie z.B. Epoxygruppen, Alkoxysilylgruppen, Harnstoffgruppen, Urethangruppen, Amidgruppen oder Nitrilgruppen. Auch di- oder höherfunktionelle (Meth)acrylatmonomere und/oder Vinylmonomere, wie z.B. Hexandioldi(meth)acrylat können in Mengen von 0 bis 3 Gew.-%, bezogen auf die Summe der Monomeren, eingesetzt werden.

Optional können auch weitere Monomere eingesetzt werden. In Frage kommen z.B. ungesättigte radikalisch polymerisierbare Verbindungen mit Phosphat- bzw. Phosphonatgruppen oder Sulfonsäure- bzw. Sulfonatgruppen.

Bevorzugte Monomere sind Methylmethacrylat, Styrol, Acrylsäure, Methacrylsäure, Butylacrylat, Bu-tylmethacrylat, Etylacrylat, tert.-Butylacrylat, 2-Ethylhexylacrylat, 2-Ethylhexylmethacrylat, Hydroxyethylme-thacrylat, Hydroxypropylmethacrylat, Hydroxyethylacrylat, Hydroxypropylacrylat, Hydroxybutylacrylat oder Hydroxybutylmethacrylat.

In den sekundären Polyacrylat-Dispersionen A1) beträgt die Menge an carboxyfunktionellen Monomeren zwischen 0,8 und 5 Gew.-%, bevorzugt 1,2 bis 4 Gew.-%, die Menge an hydroxyfunktionellen Monomeren zwischen 1 und 45 Gew.-%, bevorzugt 6 bis 30 Gew.-%.

Geeignete Polymerisationsinitiatoren sind Peroxyverbindungen wie Diacylperoxide, Alkylperester, Di-alkylperoxide, Peroxidicarbonate, anorganische Peroxide oder auch Azoverbindungen.

Prinzipiell sind alle organischen Lösemittel zur Herstellung der Polyacrylate geeignet. Die Lösemittel können in beliebigen Mengen, bevorzugt in Mengen von < 20 Gew.-%, bezogen auf die Gesamtsumme der Monomere eingesetzt werden, um niedrige Lösemittelgehalte in der Dispersion zu erhalten. Bevorzugt ist eine Lösemittelmischung aus einem hydrophoben Lösemittel, wie z.B. Solvent Naphta, Toluol, Xylol, Kristallöl und einem hydrophilen Lösemittel, wie z.B. Butylglykol, Butyldiglykol, Diethylenglykol, Propylenglykolmonomethylether oder Dipropylenglykolmonomethylether.

Die Herstellung der sekundären Polyacrylat-Dispersionen kann grundsätzlich nach jedem im Stand der Technik bekannten Verfahren erfolgen, beispielsweise Zulaufverfahren, Batchverfahren oder auch in Kaskadenverfahren.

Bevorzugte sekundäre, hydroxyfunktionelle Polyacrylat-Dispersionen A1) sind erhältlich durch Umsetzung einer Mischung aus
a) 0 bis 85 Gew.-% (Meth)acrylsäurestern mit C1- bis C18- aliphatischen Kohlenwasserstoffresten im Alkoholteil und/oder Vinylaromaten,
b) 5 bis 35 Gew.-% hydroxyfunktionellen (Meth)acrylsäurestern, welche zu einem hydrophoben Polymerisat umgesetzt werden, wobei im Anschluss an die Zugabe von a) und b) eine Mischung aus
c) 4 bis 20 Gew.-% (Meth)acrylsäurestern mit C1- bis C18- aliphatischen Kohlenwasserstoffresten im Alkoholteil und/oder Vinylaromaten,
d) 4 bis 15 Gew.-% hydroxyfunktionellen (Meth)acrylsäurestern und
e) 1 bis 5 Gew.-% säurefunktionelle Monomere, wie Acrylsäure oder Methacrylsäure zudosiert und zu einem hydrophilen Polymerisat polymerisiert wird, wobei parallel zur Zugabe von a), b), c), d), und e) Initiatoren in Mengen von 0,5 bis 6,5 Gew.-% zudosiert werden und die Summe der Prozentangaben von a), b), c), d) und e) 100 Gew.-% beträgt.

Bevorzugt wird als Lösemittel eine Mischung aus einem hydrophilen Lösemittel, z.B. Butylglykol und einem hydrophoben Lösemittel, z.B. Solvent Naphta eingesetzt.

Nach Abschluss der Polymerisationsreaktion wird die Polymerisatlösung in Wasser oder durch Zugabe von Wasser dispergiert. Die Neutralisation der Säuregruppen mit Amin(en) und/oder Basen und damit Überführung in Salzgruppen kann vor dem Dispergieren oder parallel durch Zugabe des Neutralisationsamines zusammen mit dem Dispergierwasser oder durch Zugabe parallel zum Dispergierwasser erfolgen. Der Neutralisationsgrad kann zwischen 50 und 150 %, bevorzugt zwischen 60 bis 120 % liegen.

Nach dem Dispergieren kann das verwendete Lösemittel anteilig oder ganz destillativ entfernt werden.

Bevorzugte Neutralisationsamine sind Dimethylethanolamin, Ethyldiisopropylamin, Methydiethanolamin und 2-Aminomethyl-2-methyl-propanol.

Der pH-Wert der sekundären Polyacrylat-Dispersionen liegt zwischen 5 und 11, bevorzugt zwischen 6 und 10. Die Feststoffgehalte liegen zwischen 20 und 60 Gew.-%, bevorzugt zwischen 35 und 55 Gew.-%. Die mittleren Teilchengrößen der Dispersion liegen zwischen 20 und 400 nm.

Bei der Herstellung der sekundären Polyacrylat-Dispersionen können anstelle der Lösemittel oder zusammen mit den Lösemitteln auch so genannte Reaktivverdünner eingesetzt werden. Geeignete Reaktivverdünner sind z.B. bei Raumtemperatur flüssige di- und/oder trifunktionelle Polyether, niedrigviskose Polyester wie Umsetzungsprodukte von 1 Mol einer Dicarbonsäure wie z.B. Dimerfettsäuren oder Adipinsäure mit 2 Mol eines Diols oder Triols oder 2 Mol Cardura® E 10 (Gycidylester der Versaticsäure, Hexion Specialities USA)). Ebenfalls als Reaktivverdünner geeignet sind Umsetzungsprodukte von Caprolacton mit niedermolekularen Al-koholen. Geeignet sind auch Rizinusöl und andere hydroxyfunktionelle Öle.

Geeignete hydroxyfunktionelle Polyacrylat-Emulsionen A1) sind solche, die nach bekannten Copoly-merisations-Verfahren in wässriger Emulsion in Gegenwart geeigneter oberflächenaktiver Substanzen hergestellt werden. Polyacrylat-Emulsionen und ihre Herstellung werden z.B. beschrieben in R.O. Athey jr., Emulsion Polymer Technology, Dekker, New York, 1991.

Die bei der Herstellung der sekundären Polyacrylat-Dispersionen genannten Monomeren sind grundsätzlich auch zur Herstellung von Polyacrylat-Emulsionen geeignet.

Initiatoren werden dabei entweder vorgelegt und/oder parallel, gegebenenfalls auch mit Zeitvorlauf oder Zeitverzögerung und/oder Zeitnachlauf zugegeben. Geeignete Initiatoren sind z.B. Redoxsysteme, Peroxide, Persulfate und/oder Azoverbindungen wie Dibenzoylperoxid, Dicumolperoxid, Cumolhydroperoxid, Kaliumperoxodisulfat, Ammoniumperoxodisulfat, Azobisisobutyronitril oder Di-tert-Butylperoxid. Als Redoxinitiatoren können z.B. Eisen-II-Ionen zugesetzt werden.

Bevorzugte Polyacrylat-Emulsionen A1) werden erhalten durch Emulsionspolymerisation in Wasser in Gegenwart von Initiatoren und oberflächenaktiven Substanzen von a) 10 bis 40 Gew.-% hydroxyfunktionellen (Meth)acrylsäurestem, b) 40 bis 90 Gew.-% (Meth)acrylsäurestern mit aliphatischen C1- bis C18-Kohlenwasserstoffresten im Alkoholteil und/oder Vinylaromaten, c) 0 bis 5 Gew.-% säurefunktionelle Monomere, wie Acrylsäure oder Methacrylsäure, d) 0 bis 25 Gew.-% sonstigen Monomeren wie z.B. Acrylnitril, Vinylacetat, Vinylpyrollidon.

Als Komponente A1) sind auch Mischformen von Polyacrylat-Dispersionen, wie z.B. Polyester-Polyacrylat-Dispersionen geeignet. Diese enthalten sowohl Polyacrylat- als auch Polyestersegmente und werden z.B. hergestellt in dem in Gegenwart von Polyester eine radikalische (Co)-Polymerisation von Monomeren, die den bei der Herstellung von sekundären Polyacrylat-Dispersionen genannten entsprechen, durchgeführt wird.

Diese Umsetzung wird in Substanz oder bevorzugt in organischer Lösung durchgeführt. In dem Polyesteracrylat sind dabei 10 bis 75 Gew.-%, bevorzugt 20 bis 60 Gew.-% Polyesteranteile enthalten.

Bevorzuge hydroxyfunktionelle Polyester-Polyacylat-Dispersionen werden erhalten durch eine radikalisch initiierte Polymerisation einer Mischung aus a) 20 bis 70 Gew.-% (Meth)acrylsäurestern mit aliphatischen C1- bis C18-Kohlenwasserstoffresten im Alkoholteil und/oder Vinylaromaten, b) 3 bis 35 Gew.-% hydroxyfunktionellen (Meth)acrylsäurestern, c) 2 bis 8 Gew.-% säurefunktionelle Monomere, wie Acrylsäure oder Methacrylsäure, in Gegenwart von d) 75 bis 10 Gew.-% eines hydroxyfunktionellen Polyesters, welcher gegebenenfalls durch Einbau von Doppelbindungen enthaltenden Komponenten zur Propfpolymerisation befähigte Gruppen aufweist.

Bevorzugte Initiatoren sind di-tert.-Butylperoxid und tert.-Butylperoktoat. Die Initiatoren werden in Mengen von 0,5 bis 5 Gew.-% eingesetzt. Die Reaktion wird bei 90 bis 180°C durchgeführt.

Die eingebauten Säuregruppen werden teilweise oder vollständig mit Neutralisationsaminen umgesetzt, bevorzugt sind Dimethylethanolamin, Ethyldiisopropylamin oder 2-Aminomethyl-2-methyl-propanol. Anschließend wird in oder mit Wasser dispergiert.

Geeignete Polyurethan-Dispersionen A2) sind an sich bekannte, in der Regel selbstemulgierende Polyurethane bzw. Polyurethan-Polyharnstoffe in wässriger Form.

Selbstemulgierend werden die Polyurethane durch Einbau von ionischen und/oder nichtionisch hydrophilierenden Gruppen in die Polymerkette. Der Einbau der hydrophilen Gruppen ist auf vielfältige Art möglich z.B. können hydrophile Gruppen direkt in der Polymerkette eingebaut sein oder sie können seiten- oder end-ständig angebracht sein.

Geeignete Polyurethan-Dispersionen können nach dem Fachmann bekannten Herstellverfahren in Schmelze oder in organischer Lösung hergestellt und anschließend dispergiert werden, wobei gegebenenfalls die so genannte Kettenverlängerungsreaktion zum Molekulargewichtsaufbau in organischer Lösung, parallel zum Dispergierschritt oder nach dem Dispergierschritt durchgeführt werden kann.

Üblicherweise werden folgende Rohstoffe zur Herstellung geeigneter Polyurethan-Dispersionen A2) eingesetzt bzw. miteinander umgesetzt:
1) Mindestens ein NCO-reaktiver Baustein zum Einbau hydrophiler Gruppen in das Polyurethan, wie Hydroxycarbonsäuren, z.B. Dimethylolessigsäure, 2,2-Dimethylolpropionsäure, 2,2-Dimethylbuttersäure, 2,2-Dimethylolpentansäure, Dihydroxybernsteinsäure, Hydroxypivalinsäure oder Gemische derartiger Säu-ren, Hydroxysulphonsäuren, Aminocarbonsäuren wie z.B. die Michael-Addukte von Isophorondiamin oder Ethylendiamin an Acrylsäure, Aminosulphonsäuren wie z.B. Aminoethylethansulphonsäure, hydroxy- oder aminofunktionelle Phosphonsäuren und/oder mono-, di- oder trifunktionelle Polyethylenoxidbausteine des Molekulargewichtsbereiches 350 bis 2500 g/mol, wobei auch Mischungen verschiedener Hydrophilierungsmittel eingesetzt werden können. Komponente 1) wird in solchen Mengen eingesetzt, dass stabile wässrige Dispersionen erhalten werden.
   Besonders geeignete NCO-reaktive Bausteine zum Einbau hydrophiler Gruppen sind Dimethylolpropionsäure, Dimethylolbuttersäure, mono- oder dihydroxyfunktionelle Polyethylenoxidbausteine des Molekulargewichtsbereiches 350 bis 2500, wie z.B. Polyether LB 25® (Monohydroxyfunktioneller Polyether auf Ethylenoxidbasis, Bayer MaterialScience AG, DE), Carbowax® 750 (Monohydroxyfunktioneller Polyether auf Ethylenoxidbasis, Dow Chemicals, USA), Pluriol® A 500 (Monohydroxyfunktioneller Polyether auf Ethylenoxidbasis, BASF AG, Ludwigshafen, Deutschland) und hydroxy- oder aminofunktionale Sulphonsäuren bzw. - sulphonate.
2) Mindestens ein aliphatisches und/oder aromatisches Di- oder Polyisocyanat z.B. di- oder trifunktionelle aliphatische Isocyanate wie Hexamethylendiisocyanat, Butandiisocyanat, Isophorondiisocyanat, 1-Methyl-2,4(2,6)-diisocyanatocyclohexan, Norbomandiisocyanat, Xylylendiisocyanat, Tetramethylxylylendiisocyanat, Hexahydroxylylendiisocyanat, Nonantriisocyanat, 4,4'- Diisocyanatodicyclohexylmethan. Ebenfalls geeignet ist die Mitverwendung aromatischer Isocyanate wie z.B. 2,4(2,6)-Diisocyanatotoluol oder 4,4'-Diisocyanatodiphenylmethan sowie höhermolekulare bzw. oligomere Polyisocyanate des Molekulargewichtsbereiches 336 bis 1500 auf Basis der oben genannten aliphatischen Isocyanate. Bevorzugt werden 4,4'-Diisocyanatodicyclohexylmethan und/oder Isophorondiisocyanat und/oder Hexamethylendiisocyanat und/oder 1-Methyl-2,4(2,6)-diisocyanatocyclohexan eingesetzt. Besonders bevorzugt ist die Verwendung von Isophorondiisocyanat und/oder Hexamethylendiisocyanat oder von Mischungen aus 4,4'-Diisocyanato-dicyclohexylmethan mit Isophorondiisocyanat oder Hexamethylendiisocyanat.
3) Mindestens eine Polyolkomponente des Molekulargewichtsbereiches 500 bis 18 000 g/mol auf Polyester-, Polyesteramid-, Polyacetal-, Polyether- und/oder Polysiloxan- und/oder Polycarbonatbasis mit einer Funktionalität von 1 bis 5, bevorzugt von 2 bis 2,5.

Geeignete Polyolkomponenten 3) zur Herstellung der Polyurethan-Dispersionen A2) können sein: Polyesterpolyole mit einer mittleren Funktionalität von 1,5 bis 5. Insbesondere kommen lineare Polyesterdiole oder auch schwach verzweigte Polyesterpolyole in Betracht, wie sie in bekannter Weise aus aliphatischen, cycloaliphatischen oder aromatischen Di- bzw. Polycarbonsäuren bzw. ihren Anhydriden wie z.B. Bernsteinsäu-re, Glutarsäure, Maleinsäure, Fumarsäure, Adipinsäure, Pimelinsäure, Korksäure, Azelainsäure, Sebacinsäure, Nonandicarbonsäure, Decandicarbonsäure, Dimerfettsäure, Terephthalsäure, Isophthalsäure, o-Phthalsäure, Tetrahydrophthalsäure, Hexahydrophthalsäure oder Trimellitsäure oder deren Gemisch bzw. Mischun-gen der genannten mit andern Di- bzw. Polycarbonsäuren mit mehrwertigen Alkoholen wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische, gegebenenfalls unter Mitverwendung höherfunktioneller Polyole wie Trimethylolpropan oder Glycerin hergestellt werden können. Als mehrwertige Alkohole zur Herstellung der Polyesterpolyole kommen natürlich auch cycloaliphatische und/oder aromatische Di- und Polyhydroxylverbindungen in Frage. Anstelle der freien Polycarbonsäure können auch die entsprechenden Polycarbonsäureanhydride oder entsprechende Polycarbonsäureester von niedrigen Alkoholen oder deren Gemische zur Herstellung der Polyester verwendet werden.

Es können auch anteilig monofunktionelle Carbonsäuren mitverwendet werden, wie z.B. Benzoesäure, Ethylhexansäure, Sojaölfettsäure, Erdnußölfettsäure, Ölsäure, gesättigte C12-C20-Fettsäuren bzw. deren Gemische sowie Cyclohexanol, Isooctanol und Fettalkohole.

Selbstverständlich kann es sich bei den Polyesterpolyolen auch um Homo- oder Mischpolymerisate von Lactonen handeln, die vorzugsweise durch Anlagerung von Lactonen bzw. Lactongemischen wie Butyrolacton, ε-Caprolacton und/oder Methyl-ε-caprolacton an geeignete di- und/oder höherfunktionelle Startermoleküle, wie z.B. die vorstehend als Aufbaukomponenten für Polyesterpolyole genannten niedermolekularen, mehrwertigen Alkohole, erhalten werden. Die entsprechenden Polymerisate des ε-Caprolactons sind besonders bevorzugt.

Auch Hydroxylgruppen aufweisenden Polycarbonate kommen als Polyhydroxylkomponenten in Be-tracht, z.B. solche, die durch Umsetzung von Diolen wie 1,4-Butandiol und/oder 1,6-Hexandiol und/oder Pentandiol mit Diarylcarbonaten, z.B. Diphenylcarbonat oder Phosgen hergestellt werden können.

Als Polyetherpolyole seien z.B. die Polyadditionsprodukte der Styroloxide, des Ethylenoxid, Propylenoxid, Tetrahydrofuran, Butylenoxid, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole genannt.

Es können auch Blockcopolymere auf Basis der genannten Polyole, wie z.B. Polyether-Polyester oder Polycarbonat-Polyester oder Polycarbonat-Polyether eingesetzt werden.

Bevorzugt werden Polyesterpolyole und/oder Polycarbonatpolyole und/oder C3- bzw. C4-Polyetherpolyole eingesetzt. Besonders bevorzugt ist die Verwendung einer Kombination aus Polyesterpolyol und Polycarbonatpolyol oder Polycarbonatpolyol und C4-Polyetherpolyol.
4) Gegebenenfalls niedermolekulare (Molekulargewicht < 500 g/Mol) Diole, Triole oder Tetraole wie z.B. 1,4-Butandiol, 1,6-Hexandiol, Ethylenglykol, Trimethylolpropan, Neopentylglykol, Glycerin, Pentaerythrit oder/und Aminoalkohole wie z.B. Diethanolamin, Ethanolamin, Diisopropanolamin, Propanolamin, gegebenenfalls auch in ethoxylierter und/oder propoxylierter Form.
5) Gegebenenfalls so genannte Kettenverlängerer wie z.B. Di- und/oder Polyamine und/oder Aminoalkohole, wie z.B. Diethanolamin, 1,2-Diaminopropan, 1,4-Diaminobutan, 2,5-Diamino-2,5-dimethylhexan, 1,5-Diamino-2-methylpentan (Dytek® A, Fa DuPont), 1,6-Diaminohexan, 2,2,4- und/oder 2,4,4-Trimethyl-1,6-diaminohexan, 1,11-Diaminoundecan, 1,12-Diaminododecan oder Triaminononan, Ethylendiamin, Isophorondiamin, Diethylentriamin, Hydrazin, Adipinsäuredihydrazid, Hydroxyethylethylendiamin, Bishydroxyethylethylendiamin, Aminopropanol, Aminoalkoxysilane bzw. deren Mischungen. Es kann auch eine Kettenverlängerung durch anteilige oder vollständige Umsetzung der NCO-Gruppen des aus 1), 2), 3) und 4) erhaltenen Prepolymeren mit Wasser durchgeführt werden.

Bevorzugte Polyurethan-Dispersionen A2) enthalten als Aufbaukomponenten 1) 0,5 bis 10 Gew.-% mindestens eines NCO-reaktiven Bausteines mit mindestens einer hydrophilen Gruppe, 2) 8 bis 60 Gew.-% aliphatische bzw. cycloaliphatische Di- oder Polyisocyanate, 3) 20 bis 90 Gew.-% mindestens einer Polyolkomponente des Molekulargewichtsbereiches von 500 bis 18 000 g/Mol mit einer mittleren Funktionalität von 2 bis 3, 4) 0 bis 8 Gew.-% niedermolekulare Diole und/oder Triole und 5) 0 bis 6 Gew.-% Diamine und/oder Hydrazin bzw. Hydrazide und/oder Aminoalkohole und/oder Wasser als Kettenverlängerer.

Besonders bevorzugte Polyurethan-Dispersionen A2) enthalten als Aufbaukomponenten 1) 1,4 bis 6,5 Gew.-% mindestens eines NCO-reaktiven Bausteines mit mindestens einer Carboxyl- bzw. Carboxylat- und/oder Sulphonatgruppe, gegebenenfalls in Kombination mit einem Polyethylenoxidbaustein des Molekulargewichtsbereiches 350 bis 2500 g/mol, 2) 15 bis 50 Gew.-% aliphatische und/oder cycloaliphatische Diisocyanate, 3) 40 bis 83 Gew.-% mindestens einer Polyolkomponente des Molekulargewichtsbereiches 800 bis 2400 g/Mol auf Basis eines Polyesters und/oder Polycarbonates und/oder C3-bzw. C4-Ethers, 4) 0 bis 4 Gew.-% niedermolekulare Diole und/oder Triole wie Hexandiol, Butandiol, Ethylenglykol, Glycerin, Trimethylolpropan und deren Umsetzungsprodukte mit 1 bis 6 Mol Ethylen- und/oder Propylenoxid und 5) 0 bis 4 Gew.-% Diamine und/oder Hydrazin bzw. Hydrazide und/oder Aminoalkohole und/oder Wasser als Kettenverlängerer, wobei Neutralisationsmittel für die Carboxyl- und/oder Sulphonsäuregruppen in Mengen von 50 bis 150 Equivalenten enthalten sind.

Üblicherweise werden bei der Herstellung der Polyurethan-Dispersionen in der Schmelze oder in or-ganischer Lösung die Bausteine 1), 2), 3) und gegebenenfalls 4) zu einem isocyanatfunktionellen Prepolymeren umgesetzt, wobei dieses in einem oder gegebenenfalls auch in mehreren, aufeinander folgenden Reaktionsschritten durchgeführt werden kann, wobei das isocyanatfunktionelle Prepolymere dann entweder in Schmelze, in organischer Lösung oder in wässriger Dispersion mit Kettenverlängerer 5) zu einem hochmolekularen, in Wasser dispergierten bzw. dispergierbaren Polyurethan umgesetzt wird. Gegebenenfalls wird anschließend das eingesetzte Lösemittel anteilig oder ganz destillativ entfernt. Geeignete Neutralisationsamine sind z.B. die bei der Herstellung der sekundären Polyacrylat-Dispersionen genannten Amine, wobei isocyanatreaktive Neutralisationsmittel erst nach der Kettenverlängerungsreaktion und dem Abreagieren der Isocyanatgruppen zugesetzt werden sollten. Geeignete Lösemittel sind z.B. Aceton oder Methylethylketon, welche üblicherweise abdestilliert werden, N-Methylpyrrolidon oder N-Ethylpyrrolidon.

Die Reaktionen können auch unter Einsatz von in der Polyurethanchemie gebräuchlichen Katalysatoren, wie z.B. Dibutylzinndilaurat, Dibutylzinnoxid, Zinndioktoat, Zinnchlorid, tertiäre Amine durchgeführt werden, um die Reaktionen zu beschleunigen bzw. spezielle Effekte zu erzielen.

Die in der erfindungsgemäßen Bindemittelkombination enthaltenen Polyurethan-Dispersionen A2) weisen üblicherweise Feststoffgehalte von 25 bis 60 Gew.-%, pH-Werte von 5,5 bis 11 und mittlere Teilchengrößen von 20 bis 500 nm auf.

Geeignete hydroxyfunktionelle Polyester-Polyurethan-Dispersionen A3) sind Umsetzungsprodukte aus
1) 2 bis 7 Gew.-%, bevorzugt 2 bis 5 Gew.-% Dimethylolpropionsäure und/oder Hydroxypivalinsäure gegebenenfalls in Kombination mit mono-, difunktionellen Polyethylenoxidbausteinen wie, bevorzugt monohydroxyfunktionelle Polyether auf Ethylenoxidbasis oder Methoxypolyethylenglykole,
2) 7 bis 30 Gew.-%, bevorzugt 8 bis 22 Gew.-% einer Mischung enthaltend 1,6-Hexamethylendiisocyanat und/oder Bis-(4-isocyanatocyclohexan)-methan und/oder 1-Methyl-2,4 (2,6)-diisocyanatocyclohexan und/oder 1-Isocyanato-3,3,5-trimethyl-5-isocyanatomethylcyclohexan,
3) 60 bis 91 Gew.-%, bevorzugt 70 bis 88 Gew.-% Polyolkomponenten des Molekulargewichtsbereiches 500 bis 8 000 g/mol auf Polyester-, Polyesteramid-, Polyacetal-, Polyether-, Polysiloxan- und/oder Polycarbonatbasis mit einer Funktionalität von 1,8 bis 5, bevorzugt von 2 bis 4, wobei 50 Gew.-%, bevorzugt 75 Gew.-%, besonders bevorzugt 100 Gew.-% der Polyolkomponente aus mindestens einem Polyester besteht und 4) 0 bis 5 Gew.-% niedermolekulare (Molekulargewicht < 500 g/Mol) Diole, Triole, Tetraole und/oder Aminoalkohole.

Die Umsetzung der Komponenten erfolgt in organischer Lösung oder in der Schmelze, gegebenenfalls unter Einsatz von in der Polyurethanchemie gebräuchlichen Katalysatoren oder/und in Gegenwart nicht reaktiver, als Neutralisationsmittel wirksamer Amine, wie z.B. Triethylamin, Ethyldiisopropylamin, N-Methylmorpholin, zu hydroxyfunktionellen, Polyester-Polyurethanen, welche nach der Umsetzung der Komponenten 1), 2), 3) und 4) keine freien Isocyanatgruppen mehr aufweisen.

Anschließend wird in oder mit Wasser dispergiert und gegebenenfalls überschüssiges Lösemittel wieder abdestilliert.

Geeignete Neutralisationsmittel, die vor oder während des Dispergierschrittes zugegeben werden können, sind z.B. Diethanolamin, Dimethylethanolamin, Methyldiethanolamin, Ammoniak oder solche, die bei der Herstellung der sekundären Polyacrylat-Dispersionen genannt wurden

Polyester-Polyurethan-Dispersion A3) weisen Feststoffgehalte von 25 bis 55 Gew.-%, pH-Werten von 6 bis 11 und mittlere Teilchengrößen von 10 bis 350 nm auf.

Weitere geeignete Komponente A) kann ein wasserverdünnbarer, hydroxyfunktioneller Polyesterharz A4) sein.

Als Komponente A4) geeignete wasserverdünnbare Polyester sind Anreibeharze, die über eine sehr gute Pigmentbenetzung bzw. Pigmentaffinität verfügen. Die Komponente A4) weist Säurezahlen im Bereich von 25 bis 75 mg KOH/g Substanz und/oder Hydroxylgruppengehalte von 2,5 bis 10 Gew.-% und/oder Molekulargewichte im Bereich von 750 bis 5000 g/Mol und/oder Fettsäurebestandteile in Mengen von 15 bis 50 Gew.-% auf.

Bevorzugt als Anreibeharze A4) sind wasserverdünnbare Polyester, hergestellt durch Umsetzung von
1) 30 bis 62 Gew.-% Diole, ausgewählt aus der Gruppe Hexandiol, Neopentylglykol, Diethylenglykol, Ethylenglykol, Propan-1,2-diol, Propan-1,3-diol und/oder 1-Butandiol, mit
2) 5 bis 20 Gew.-% Triole und/oder Tetraolen, ausgewählt aus der Gruppe Trimethylolpropan, Glycerin und/oder Pentaerythrit, mit
3) 30 bis 62 Gew.-% Dicarbonsäuren, ausgewählt aus der Gruppe Phthalsäureanhydrid, Isophthalsäure, Hexahydrophthalsäure, Tetrahydrophthalsäure und/oder Adipinsäure, anschließender Umsetzung des Polyesters mit
4) 3 bis 15 Gew.-% eines Anhydrides, bevorzugt Trimellithsäureanhydrid, wobei sich die Prozentzahlen zu 100 Gew.-% ergänzen und die Säuregruppen teilweise oder ganz durch Umsetzung mit Neutralisationsaminen in die Salzform überführt werden.

Geeignete Polyester-Dispersionen bzw. -Lösungen A4) werden erhalten, indem hydroxyfunktionelle Polyester, hergestellt durch Umsetzung von mono-, di und/oder höherfunktionellen Alkoholen und Carbonsäuren bzw. deren Anhydriden unter Wasserabspaltung, mit Säureanhydriden wie z.B. Phthalsäureanhydrid, Hexahydrophthalsäureanhydrid, Tetrahydrophthalsäureanhydrid, Maleinsäureanhydrid, Trimellithsäureanhydrid, Pyromellithsäureanhydrid bei 60 bis 200°C, bevorzugt bei 120 bis 180°C derart umgesetzt werden, dass die Säureanhydride mit einem Teil der Hydroxylgruppen unter Ringöffnung des Anhydrids und Einbau in den Polyester umgesetzt werden. Dadurch werden hydroxy- und carboxyfunktionelle Polyester erhalten, die nach anteiliger oder vollständiger Neutralisation der Carboxylgruppen in Wasser dispergiert bzw. gelöst werden können. Die wässrigen Polyesterlösungen weisen mittlere Teilchengrößen von 10 bis 200, bevorzugt von 25 bis 100 nm auf.

Geeignete Rohstoffe zur Herstellung der hydroxyfunktionellen Polyester sind z.B. Diole wie Ethylenglykol, Buylenglykol, Diethylenglykol, Triethylenglykol, Polyalkylenglykole wie Polyethylenglykol, weiterhin Propandiol, Butandiol(1,4), Hexandiol(1,6), Neopentylglykol oder Hydroxypivalinsäureneopentylglykolester, wobei die drei letztgenannten Verbindungen bevorzugt sind. Als gegebenenfalls mit einzusetzende Polyole sind hier beispielsweise Trimethylolpropan, Glycerin, Erythrit, Pentaerythrit, Trimethylolbenzol oder Trishydroxyethylisocyanurat zu nennen. Als Di- bzw. Polycarbonsäuren kommen beispielsweise in Frage: Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure, 2,2-Dimethylbernsteinsäure, Trimellithsäure oder Pyromellithsäure. Anhydride dieser Säuren sind ebenfalls einsetzbar, soweit sie existieren. Für die Belange der vorliegenden Erfindung werden die Anhydride infolgedessen durch den Ausdruck "Säure" umfasst. Es können auch Monocarbonsäuren mit verwendet werden. Geeignete Monocarbonsäuren sind z.B. Kokosölfettsäure, Sojaölfettsäure, Safflorölfettsäure, Ricinusfettsäure, Ricinensäure, Erdnußölfettsäure, Tallölfettsäure oder Konjuenfettsäure, Benzoesäure, tert.-Butylbenzoesäure, Hexahydrobenzoesäure, 2-Ethylhexansäure, Isononansäure, Decansäure oder Octadecansäure.

Es kann auch ε-Caprolacton bei der Herstellung der Polyester mit verwendet werden.

Die hydroxyfunktionellen Polyester werden durch Polykondensation der genannten Rohstoffe, gege-benenfalls unter Einsatz geeigneter Veresterungskatalysatoren hergestellt und anschließend mit einem Säureanhydrid umgesetzt. Der so hergestellte Polyester wird in einem Lösemittel bzw. Lösemittelgemisch gelöst und mit Neutralisationsmittel versetzt.

Die Dispergierung bzw. Lösung in Wasser kann direkt nach Herstellung des Polyesters und Umsetzung mit dem Säureanhydrid oder aber später erfolgen.

Eine bevorzugte Polyesterzusammensetzung für eine Polyester-Dispersion bzw. -lösung A4) ist aufgebaut aus
a) 30 bis 62, bevorzugt 30 bis 50 Gew.-% Diole, ausgewählt aus der Gruppe Hexandiol, Butandiol, Ethylenglykol, Diethylenglykol und/oder Neopentylglykol,
b) 5 bis 20, bevorzugt 6 bis 15 Gew.-% Triole und/oder Tetraole, bevorzugt Trimethylolpropan und/oder Glycerin
c) 30 bis 62, bevorzugt 33 bis 58 Gew.-% Dicarbonsäuren bzw. deren Anhydride, ausgewählt aus der Gruppe Phthalsäureanhydrid, Isophthalsäure, Tetrahydrophthalsäure, Terephthalsäure und/oder Adipinsäure,
d) 0 bis 30, bevorzugt 0 bis 20 Gew.-% Monocarbonsäuren und/oder Caprolacton sowie e) 3 bis 15, bevorzugt 5 bis 12 Gew.-% Säureanhydrid, ausgewählt aus der Gruppe Trimellithsäureanhydrid, Tetrahydrophthalsäureanhydrid und/oder Phthalsäureanhydrid.

Üblicherweise haben die Polyurethan-Dispersionen A2) per Gelchromatographie bestimmbare mittlere Molekulargewichte Mn von > 10 000 g/mol, bevorzugt > 30 000 g/Mol. Häufig sind in den Polyurethan-Dispersionen anteilig sehr hochmolekulare, nicht mehr vollständig in organischen Lösemitteln lösliche Anteile enthalten, die sich dann einer Molekulargewichtsbestimmung entziehen.

Üblicherweise haben die Polyester-Polyurethan-Dispersionen A3) z.B. per Gelchromatographie be-stimmbare mittlere Molekulargewichte Mn von 1500 bis 8000 g/Mol.

Üblicherweise haben die Polyester-Dispersionen bzw. -lösungen A4) z.B. per Gel-chromatographie ermittelbare mittlere Molekulargewichte Mn von 7500 bis 5000, bevorzugt von 1000 bis 3500 g/Mol.

Von besonderem Interesse bezüglich des Anforderungsniveaus in den Bereichen Autoreparatur- und Großfahrzeuglackierung sind Harzdispersionen auf Polymerisatbasis. Bevorzugt kommen daher in den erfindungsgemäßen Beschichtungsmitteln als Komponente A) Harzdispersionen auf Polyacrylatbasis A1) zum Einsatz. Dabei kann es sich einerseits um sogenannte Sekundärdispersionen handeln, bei denen die Harzherstellung zunächst in einem organischen Medium, in der Regel einem Lösemittel, erfolgt und das Harz nach Neutralisation in einem zweiten Schritt in Wasser dispergiert wird. Das zur Herstellung verwendete Lösemittel kann im Anschluß an die Dispergierung entweder destillativ entfernt werden oder aber als Colösemittel in der Dispersion verbleiben. Andererseits können als Harzdispersionen auch sogenannte Primärdispersionen dienen. Darunter versteht man in der Regel Emulsionscopolymerisate, die unter Zuhilfenahme von Emulgatoren direkt in Wasser hergestellt werden. Bevorzugt werden Sekundärdispersionen eingesetzt.

Die in den erfindungsgemäßen Beschichtungsmitteln eingesetzten Harzdispersionen A) können sowohl durch Verwendung von externen Emulgatoren als auch mit Hilfe von internen Emulgatorfunktionen hergestellt werden. Unter internen Emulgatoren versteht man dabei chemisch in die Harze eingebaute ionische Gruppierungen, wie z. B. Carboxylat- oder Sulfonatgruppen, wobei die entsprechenden Gegenionen z. B. Alkali-, Erdalkali- oder Ammoniumionen bzw. quartäre Stickstoffatome sind.

In der Regel sind die in den erfindungsgemäßen Beschichtungsmitteln eingesetzten Harzdispersionen A) hydroxy- oder aminofunktionell. In Ausnahmefällen ist es darüberhinaus auch möglich, nichtfunktionelle Dispersionen als Bindemittelkomponente A) einzusetzen.

Bevorzugt kommen hydroxyfunktionelle Harzdispersionen zum Einsatz, die bezogen auf Festharz einen Gehalt an Hydroxylgruppen von 0,5 bis 7,0 Gew.-%, vorzugsweise von 0,5 bis 6,0 Gew.-%, besonders bevorzugt von 1,0 bis 5,0 Gew.-%, und Säurezahlen von weniger als 50 mg KOH/g, vorzugsweise weniger als 40 mg KOH/g, besonders bevorzugt bei weniger als 30 mg KOH/g, aufweisen.

Bei der Vernetzerkomponente B) handelt es sich um beliebige, durch Nanopartikel modifizierte Polyisocyanate.

Geeignete Polyisocyanate B) sind beispielsweise nanopartikelmodifizierte Polyisocyanatgemische auf Basis aliphatischer, cycloaliphatischer, araliphatischer und/oder aromatischer Diisocyanate mit einer mittleren NCO-Funktionalität von mindestens 2,1 und einem Gehalt an Isocyanatgruppen (berechnet als NCO; Molekulargewicht = 42) von 2,0 bis 24,0 Gew.-%, die durch Umsetzung von
a1) gegebenenfalls einer hydrophoben Polyisocyanatkomponente und
a2) einer hydrophil modifizierten Polyisocyanatkomponente mit
b) Alkoxysilanen der Formel (I)

   Q-Z-SiXₙY₃₋ₙ (I)

   in welcher
   Q eine gegenüber Isocyanaten reaktive Gruppe,
   X eine hydrolysierbare Gruppe,
   Y gleiche oder verschiedene Alkylgruppen
   Z eine C₁-C₁₂-Alkylengruppe und
   n eine ganze Zahl von 1 bis 3 ist,
   anschließendes Eindispergieren von
c) bevorzugt oberflächenmodifizierten anorganischen Partikeln einer mittels dynamischer Lichtstreuung in Teilchenzahlgewichtung bestimmten mittleren Partikelgröße von kleiner als 200 nm
   und gegebenenfalls Zugabe von
d) Lösungsmittel
hergestellt werden.

Geeignete hydrophobe Ausgangspolyisocyanate a1) zur Herstellung der Härterkomponente B) sind beliebige hydrophobe Polyisocyanate mit aliphatisch, cycloaliphatisch, araliphatisch und/oder aromatisch gebundenen Isocyanatgruppen, die eine (mittlere) NCO-Funktionalität von 2,0 bis 5,0, vorzugsweise von 2,3 bis 4,5, einen Gehalt an Isocyanatgruppen von 8,0 bis 27,0 Gew.-%, vorzugsweise 14,0 bis 24,0 Gew.-% und einen Gehalt an monomeren Diisocyanaten von weniger als 1 Gew.-%, vorzugsweise weniger als 0,5 Gew.-% aufweisen.

Hierbei handelt es sich um beliebige, durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, den DE-A'en 16 70 666, 19 54 093, 24 14 413, 24 52 532, 26 41 380, 37 00 209, 39 00 053 und 39 28 503 oder den EP-A'en 336 205, 339 396 und 798 299 beispielhaft beschrieben sind.

Geeignete Diisocyanate zur Herstellung solcher hydrophoben Polyisocyanate a1) sind beliebige Diisocyanate mit aliphatisch, cycloaliphatisch, araliphatisch und/oder aromatisch gebundenen Isocyanatgruppen, die nach beliebigen Verfahren, z. B. durch Phosgenierung oder auf phosgenfreiem Weg, beispielsweise durch Urethanspaltung, hergestellt werden können. Geeignete Ausgangsdiisocyanate sind beispielsweise solche des Molekulargewichtsbereiches 140 bis 400 g/mol, wie z. B. 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan, 1,10-Diisocyanatodecan, 1,3-und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan, 1,3- und 1,4-Bis(isocyanatomethyl)cyclohexan, 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(isocyanatomethyl)benzol, 1,3- und 1,4-Bis(1-isocyanato-1-methylethyl)-benzol (TMXDI), Bis(4-(1-isocyanato-1-methylethyl)phenyl)-carbonat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat sowie beliebige Gemische solcher Diisocyanate. Weitere ebenfalls geeignete Diisocyanate finden sich darüberhinaus beispielsweise in Justus Liebigs Annalen der Chemie Band 562 (1949) S. 75 - 136.

Bevorzugt handelt es sich bei den hydrophoben Ausgangskomponenten a1) um Polyisocyanate oder Polyisocyanatgemische der genannten Art mit ausschließlich aliphatisch und/oder cycloaliphatisch gebundenen Isocyanatgruppen.

Ganz besonders bevorzugte hydrophobe Ausgangskomponenten a1) sind Polyisocyanate bzw. Polyisocyanatgemische mit Isocyanuratstruktur auf Basis von HDI, IPDI und/oder 4,4'-Diisocyanatodicyclohexylmethan.

Geeignete hydrophil modifizierte Polyisocyanaten a2) zur Herstellung der Vernetzerkomponente B) bestehen aus mindestens einem der vorstehend genannten hydrophoben Ausgangspolyisocyanate a1) sowie mindestens einem ionischen und/oder nichtionischen Emulgator e).

Geeignete Emulgatoren e) zur Herstellung hydrophil modifizierter Ausgangspolyisocyanate a2) sind beliebige grenzflächenaktive Stoffe, die aufgrund ihrer Molekülstruktur in der Lage sind, Polyisocyanate bzw. Polyisocyanatgemische in wäßrigen Emulsionen über einen längeren Zeitraum zu stabilisieren.

Eine Art nichtionischer Emulgatoren e) stellen beispielsweise Umsetzungsprodukte e1) der genannten hydrophoben Polyisocyanatkomponenten a1) mit hydrophilen Polyetheralkoholen dar.

Geeignete hydrophile Polyetheralkohole sind ein- oder mehrwertige, im statistischen Mittel 5 bis 50 Ethylenoxideinheiten pro Molekül aufweisende Polyalkylenoxidpolyetheralkohole, wie sie in an sich bekannter Weise durch Alkoxylierung geeigneter Startermoleküle zugänglich sind (siehe z. B. Ullmanns Encyclopädie der technischen Chemie, 4. Auflage, Band 19, Verlag Chemie, Weinheim S. 31 - 38). Solche Startermoleküle können beispielsweise beliebige ein- oder mehrwertige Alkohole des Molekulargewichtsbereiches 32 bis 300 sein, wie z. B. Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole, Hydroxymethylcyclohexan, 3-Methyl-3-hydroxymethyloxetan, Benzylalkohol, Phenol, die isomeren Kresole, Octylphenole, Nonylphenole und Naphthole, Furfurylalkohol, Tetrahydrofurfurylalkohol, 1,2-Ethandiol, 1,2- und 1,3-Pro-pandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können. Geeignete Polyetheralkohole sind entweder reine Polyethylenoxidpolyetheralkohole oder gemischte Polyalkylenoxidpolyether, deren Alkylenoxideinheiten zu mindestens 70 mol-%, vorzugsweise zu mindestens 80 mol-% aus Ethylenoxideinheiten bestehen.

Bevorzugte Polyalkylenoxidpolyetheralkohole sind solche, die unter Verwendung der oben genannten Monoalkohole des Molekulargewichtsbereiches 32 bis 150 als Startermoleküle hergestellt wurden. Besonders bevorzugte Polyetheralkohole sind reine Polyethylenglycolmonomethyletheralkohole, die im statistischen Mittel 5 bis 50, ganz besonders bevorzugt 5 bis 25 Ethylenoxideinheiten aufweisen.

Die Herstellung solcher nichtionischer Emulgatoren e1) ist prinzipiell bekannt und beispielsweise in EP-B 0 206 059 und EP-B 0 540 985 beschrieben.

Die Herstellung kann durch Umsetzung der hydrophoben Polyisocyanatkomponenten a1) mit den genannten Polyetheralkoholen entweder in einem separaten Reaktionsschritt mit anschließendem Vermischen mit den in eine hydrophile Form zu überführenden Polyisocyanatkomponenten a1) oder aber in der Weise erfolgen, dass man die Polyisocyanatkomponenten a1) mit einer entsprechenden Menge der Polyetheralkohole abmischt, wobei sich spontan ein erfindungsgemäßes hydrophiles Polyisocyanatgemisch bildet, das neben nicht umgesetztem Polyisocyanat a1) den sich in situ aus dem Polyetheralkohol und einem Teil der Komponente a1) bildenden Emulgator e1) enthält.

Die Herstellung dieser Art nichtionischer Emulgatoren e1) erfolgt im allgemeinen bei Temperaturen von 40 bis 180 °C, vorzugsweise 50 bis 150 °C, unter Einhaltung eines NCO-/OH-ÄquivalentVerhältnisses von 2:1 bis 400:1, vorzugsweise von 4:1 bis 140:1.

Bei der erstgenannten Variante der separaten Herstellung der nichtionischen Emulgatoren e1) werden diese vorzugsweise unter Einhaltung eines NCO/OH-Äquivalentverhältnisses von 2 : 1 bis 6 : 1 hergestellt. Bei der in situ-Herstellung der Emulgatoren e1) kann selbstverständlich ein hoher Überschuss an Isocyanatgruppen innerhalb des oben genannten breiten Bereichs zur Anwendung gelangen.

Die Reaktion der hydrophoben Polyisocyanatkomponente a1) mit den genannten hydrophilen Polyetheralkoholen zu nichtionischen Emulgatoren e1) kann nach dem in EP-B 0 959 087 beschriebenen Verfahren auch so geführt werden, dass die durch NCO/OH-Reaktion primär gebildeten Urethangruppen zumindest anteilig, vorzugsweise zu mindestens 60 mol-%, zu Allophanatgruppen weiter umgesetzt werden. In diesem Fall werden Reaktionspartner im oben genannten NCO/OH-Äquivalentverhältnis bei Temperaturen von 40 bis 180 °C, vorzugsweise 50 bis 150 °C, in der Regel in Gegenwart der in den zitierten Patentschriften angeführten, zur Beschleunigung der Allophanatisierungsreaktion geeigneten Katalysatoren zur Reaktion gebracht.

Ein weiterer Typ geeigneter nichtionischer Emulgatoren e) stellen beispielsweise auch Umsetzungprodukte von monomeren Diisocyanaten oder Diisocyanatgemischen mit den oben genannten ein- oder mehrwertigen hydrophilen Polyetheralkoholen, insbesondere mit reinen Polyethylenglycolmonomethyletheralkoholen, die im statistischen Mittel 5 bis 50, bevorzugt 5 bis 25 Ethylenoxideinheiten aufweisen, dar. Die Herstellung solcher Emulgatoren e2) ist ebenfalls bekannt und beispielsweise in EP-B 0 486 881 beschrieben.

Gegebenenfalls können die Polyetherurethan-Emulgatoren e2) aber auch im Anschluß an das Abmischen der Komponenten in den vorstehend beschriebenen Mengenverhältnissen in Gegenwart geeigneter Katalysatoren mit den Polyisocyanaten a1) unter Allophanatisierung umgesetzt werden. Dabei entstehen ebenfalls erfindungsgemäße hydrophile Polyisocyanatgemische, die neben nicht umgesetztem Polyisocyanat a1) einen sich in situ aus dem Emulgator e2) und einem Teil der Komponente a1) bildenden weiteren nichtionischen Emulgatortyp e3) mit Allophanatstruktur enthalten. Auch die in situ-Herstellung solcher Emulgatoren e3) ist bereits bekannt und beispielsweise in WO 2005/047357 beschrieben.

Die hydrophilen Polyisocyanatgemische a2) können anstelle der beispielhaft beschriebenen nichtionischen Emulgatoren e1) - e3) auch Emulgatoren mit ionischen, insbesondere anionischen Gruppen enthalten.

Solche ionischen Emulgatoren e) stellen sulfonatgruppenhaltige Emulgatoren e4) dar, wie sie beispielsweise nach dem Verfahren der WO 01/88006 durch Umsetzung der hydrophoben Polyisocyanatkomponenten a1) mit 2-(Cyclohexylamino)-ethansulfonsäure und/oder 3-(Cyclohexylamino)-propansulfonsäure erhältlich sind. Diese Umsetzung findet in der Regel bei Temperaturen von 40 bis 150 °C, vorzugsweise 50 bis 130 °C, unter Einhaltung eines ÄquivalentVerhältnisses von NCO-Gruppen zu Aminogruppen von 2:1 bis 400:1, vorzugsweise von 4:1 bis 250:1, statt, wobei zur Neutralisation der Sulfonsäuregruppen tertiäre Amine mitverwendet werden. Geeignete Neutralisationsamine sind beispielsweise tertiäre Monoamine, wie z. B. Trimethylamin, Triethylamin, Tripropylamin, Tributylamin, Dimethylcyclohexylamin, Diisopropylethylamin, N-Methylmorpholin, N-Ethylmorpholin, N-Methylpiperidin, oder N-Ethylpiperidin, tertiäre Diamine, wie z. B. 1,3-Bis-(dimethylamino)-propan, 1,4-Bis-(dimethylamino)-butan oder N,N'-Dimethylpiperazin, oder, allerdings weniger bevorzugt, Alkanolamine, wie z. B. Dimethylethanolamin, Methyldiethanolamin oder Triethanolamin.

Wie bereits für die nichtionischen Emulgatoren e1) beschrieben, kann auch die Herstellung dieser ionischen Emulgatoren e4) entweder in einem separaten Reaktionsschritt mit anschließendem Vermischen mit den in eine hydrophile Form zu überführenden hydrophoben Polyisocyanatkomponenten a1) oder aber in situ in diesen Polyisocyanatkomponenten erfolgen, wobei sich direkt ein erfindungsgemäßes hydrophiles Polyisocyanatgemisch bildet, das neben nicht umgesetztem Polyisocyanat a1) den sich in situ aus den Aminosulfonsäuren, dem Neutralisationsamin und einem Teil der Komponenten a1) bildenden Emulgator e4) enthält.

Ein weiterer Typ geeigneter Emulgatoren e) sind solche, die in einem Molekül gleichzeitig ionische und nichtionische Strukturen enthalten. Bei diesen Emulgatoren e5) handelt es sich z. B. um mit tertiären Aminen, wie z. B. den oben genannten Neutralisationsaminen neutralisierte Alkylphenolpolyglykolether-phosphate und -phosphonate oder Fettalkoholpolyglykoletherphosphate und -phosphonate, wie sie beispielsweise in WO 97/31960 zur Hydrophilierung von Polyisocyanaten beschrieben sind, oder auch um mit solchen tertiären Aminen neutralisierte Alkylphenolpolyglykolether-sulfate oder Fettalkoholpolyglykolether-sulfate.

Unabhängig von der Art des Emulgators e) und dessen Herstellung wird dessen Menge bzw. die Menge der bei einer in situ-Herstellung des Emulgators den hydrophoben Polyisocyanaten a1) zugesetzten ionischen und/oder nichtionischen Komponenten im allgemeinen so bemessen, dass die letztlich erhaltenen hydrophil modifizierten Polyisocyanatgemische a2) eine die Dispergierbarkeit des Polyisocyanatgemisches in Wasser gewährleistenden Menge, vorzugsweise 1 bis 50 Gew.-%, besonders bevorzugt 2 bis 30 Gew.-%, bezogen auf die Gesamtmenge der Komponenten a1) und e) enthalten.

Die Umsetzung der hydrophoben Ausgangspolyisocyanate a1) mit den ionischen und/oder nichtionischen Emulgatoren e) kann lösemittelfrei oder gegebenenfalls in einem geeigneten, gegenüber Isocyanatgruppen inerten Lösemittel erfolgen. Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso®, Isopar®, Nappar® (Deutsche EXXON CHEMICAL GmbH, Köln, DE) und Shellsol® (Deutsche Shell Chemie GmbH, Eschborn, DE) im Handel sind, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

Zur Reaktionsbeschleunigung können bei der Herstellung der hydrophil modifizierten Polyisocyanate a2) gegebenenfalls aber auch die üblichen aus der Polyurethanchemie bekannten Katalysatoren mitverwendet werden, beispielsweise tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethyl-aminocyclohexan, N,N'-Dimethylpiperazin oder Metallsalze wie Eisen(III)-chlorid, Aluminium-tri(ethylacetoacetat), Zinkchlorid, Zink(II)-n-octanoat, Zink(II)-2-ethyl-1-hexanoat, Zink(II)-2-ethylcaproat, Zink(II)-stearat, Zink(II)-naphthenat, Zink(II)-acetyl-acetonat, Zinn(II)-n-octanoat, Zinn(II)-2-ethyl-1-hexanoat, Zinn(II)-ethylcaproat, Zinn(II)-laurat, Zinn(II)-palmitat, Dibutylzinn(IV)-oxid, Dibutylzinn(IV)-dichlorid, Dibutylzinn(IV)-diacetat, Dibutylzinn(IV)-dimaleat, Dibutylzinn(IV)-dilaurat, Dioctylzinn(IV)-diacetat, Zirconium-(IV)-2-ethyl-1-hexanoat, Zirconium-(IV)-neodecanoat, Zirconium-(IV)-naphthenat, Zirconium-(IV)-acetylacetonat, Wismut-2-ethyl-1-hexanoat, Wismut-octoat, Molybdänglykolat oder beliebige Gemische solcher Katalysatoren.

Bevorzugte Ausgangspolyisocyanate a2) zur Herstellung der Härterkomponente B) sind Polyisocyanate oder Polyisocyanatgemische der genannten Art mit ausschließlich aliphatisch und/oder cycloaliphatisch gebundenen Isocyanatgruppen, die mindestens einen der vorstehend beschriebenen Emulgatoren e1) bis e5) oder beliebige Gemische solcher Emulgatoren enthalten. Ganz besonders bevorzugte hydrophile Polyisocyanate a2) sind solche mit Isocyanuratstruktur auf Basis von HDI, IPDI und/oder 4,4'-Diisocyanatodicyclohexylmethan.

Bevorzugte in der Härterkomponente eingesetzte Ausgangspolyisocyanate a) sind hydrophobe Polyisocyanate a1) und hydrophile, Sulfonatgruppen aufweisende Emulgatoren e4) enthaltende Polyisocyanate a2). Besonders bevorzugte in der Härterkomponente eingesetzte Ausgangspolyisocyanate a) sind hydrophobe Polyisocyanate a1).

Bevorzugt ist in Formel (I) die Gruppe X eine Alkoxy- oder Hydroxygruppe, besonders bevorzugt Methoxy, Ethoxy, Propoxy oder Butoxy.

Bevorzugt steht Y in Formel (I) für eine lineare oder verzweigte C₁-C₄-Alkylgruppe, bevorzugt Methyl oder Ethyl.

Z ist in Formel (I) bevorzugt eine lineare oder verzweigte C₁-C₄-Alkylengruppe.

Bevorzugt steht a in Formel (I) für 1 oder 2.

Bevorzugt ist in Formel (I) die Gruppe Q eine gegenüber Isocyanaten unter Urethan-, Harnstoff- oder Thioharnstoffbildung reagierende Gruppe. Dies sind bevorzugt OH-, SH- oder primäre oder sekundäre Aminogruppen.

Bevorzugte Aminogruppen entsprechen der Formel -NHR¹ , wobei R¹ Wasserstoff, eine C₁-C₁₂-Alkylgruppe oder eine C₆-C₂₀-Arylgruppe oder ein Asparaginsäureester-Rest der Formel R²OOC-CH₂-CH(COOR³)- , wobei R², R³ bevorzugt gleiche oder verschiedene Alkylreste sind, die gegebenenfalls auch verzweigt sein können, mit 1 bis 22 Kohlenstoffatomen, bevorzugt 1 bis 4 Kohlenstoffatomen. Besonders bevorzugt sind R², R³ jeweils Methyl- oder Ethylreste.

Solche alkoxysilanfunktionellen Asparaginsäureester sind, wie in US 5364955 beschrieben, in an sich bekannter Weise durch Addition von aminofunktionellen Alkoxysilanen an Malein- oder Fumarsäureester erhältlich.

Aminofunktionelle Alkoxysilane, wie sie als Verbindungen der Formel (I) oder zur Herstellung der alkoxysilylfunktionellen Asparaginsäureester eingesetzt werden können, sind beispielsweise 2-Aminoethyldimethylmethoxysilan, 3-Aminopropyltrimethoxysilan, 3-Aminopropyltriethoxysilan, 3-Aminopropylmethyldimethoxysilan, Aminopropylmethyldiethoxysilan.

Ferner können als Aminoalkoxysilane mit sekundären Aminogruppen der Formel (I) in B) auch N-Methyl-3-aminopropyltrimethoxysilan, N-Methyl-3-aminopropyltriethoxysilan, N-Phenyl-3-aminopropyltrimethoxysilan, Bis-(gamma-trimethoxysilylpropyl)amin, N-Butyl-3-aminopropyltrimethoxysilan, N-Butyl-3-aminopropyltriethoxysilan, N-Ethyl-3-aminoisobutyltrimethoxysilan, N-Ethyl-3-aminoisobutyltriethoxysilan oder N-Ethyl-3-aminoisobutylmethyldimethoxysilan, N-Ethyl-3-aminoisobutylmethyldiethoxysilan.

Geeignete Malein- oder Fumarsäureester zur Herstellung der Asparaginsäureester sind Maleinsäuredimethylester, Maleinsäurediethylester, Maleinsäuredi-n-butylester sowie die entsprechenden Fumarester. Maleinsäuredimethylester und Maleinsäurediethylester sind besonders bevorzugt.

Bevorzugtes Aminosilan zur Herstellung der Asparaginsäureester ist 3-Amino-propyltrimethoxysilan oder 3-Aminopropyltriethoxysilan.

Die Umsetzung der Malein- bzw. Fumarsäureester mit den Aminoalkylalkoxysilanen erfolgt innerhalb eines Temperaturbereichs von 0 bis 100 ° C, wobei die Mengenverhältnisse in der Regel so gewählt werden, dass die Ausgangsverbindungen im molaren Verhältnis 1:1 eingesetzt werden. Die Umsetzung kann in Substanz oder auch in Gegenwart von Lösungsmitteln wie z.B. Dioxan durchgeführt werden. Die Mitverwendung von Lösungsmitteln ist jedoch weniger bevorzugt. Selbstverständlich können auch Mischungen verschiedener 3-Aminoalkylalkoxysilane mit Mischungen von Fumar- und/oder Maleinsäureestern umgesetzt werden.

Bevorzugte Alkoxysilane zur Modifizierung der Polyisocyanate sind sekundäre Aminosilane, der vorstehend beschriebenen Art, besonders bevorzugt Asparaginsäureester der vorstehend beschriebenen Art sowie Di- bzw. Monoalkoxysilane.

Die vorstehend genannten Alkoxysilane können einzeln aber auch in Mischungen zur Modifizierung eingesetzt werden.

Wesentlich ist, dass bei der Herstellung der nanopartikelmodifizierten Polyisocyanate wasserfrei gearbeitet wird, also kein Wasser separat beispielsweise als Komponente im Verfahren oder als Lösungs- oder Dispergiermittel zugesetzt wird. Bevorzugt beträgt daher der Anteil an Wasser im erfindungsgemäßen Verfahren bevorzugt weniger als 0,5 Gew.-%, besonders bevorzugt weniger als 0,1 Gew.-% bezogen auf die Gesamtmenge der eingesetzten Komponenten a) bis e).

Bei der Modifizierung beträgt das Verhältnis von freien NCO-Gruppen des zu modifizierenden Isocyanats zu den NCO-reaktiven Gruppen Q des Alkoxysilans der Formel (I) bevorzugt 1 : 0,01 bis 1 : 0,75, besonders bevorzugt 1 : 0,02 bis 1 : 0,4, ganz besonders bevorzugt 1:0,04 bis 1:0,2.

Prinzipiell ist es natürlich auch möglich, höhere Anteile an NCO-Gruppen mit den vorgenannten Alkoxysilanen zu modifizieren; jedoch ist darauf zu achten, dass die Anzahl der zur Vernetzung zur Verfügung stehenden freien NCO-Gruppen für eine zufrieden stellende Vernetzung noch ausreichend ist.

Die Reaktion von Aminosilan und Polyisocyanat erfolgt bei 0 bis 100 °C, bevorzugt bei 0 bis 50 °C, besonders bevorzugt bei 15 bis 40 °C. Gegebenenfalls kann eine exotherme Reaktion durch Kühlung kontrolliert werden.

Die Herstellung der Härterkomponenten B) kann gegebenenfalls in einem geeigneten, gegenüber Isocyanatgruppen inerten Lösemittel durchgeführt werden. Geeignete Lösemittel sind beispielsweise die bereits vorstehend bei der Herstellung der hydrophilen Polyisocyanatkomponenten a2) genannten an sich bekannten Lacklösemittel oder beliebige Gemische solcher Lösemittel.

Während oder im Anschluss an die Modifizierung des Polyisocyanats a) mit Silan b) werden die gegebenenfalls oberflächenmodifizierten Nanopartikel c) eingebracht. Dies kann durch einfaches Einrühren der Partikel erfolgen. Denkbar sind jedoch auch der Einsatz erhöhter Dispergierenergie, wie beispielsweise durch Ultraschall, Strahldispergierung oder Hochgeschwindigkeitsrührer nach dem Rotor-Stator-Prinzip erfolgen kann. Bevorzugt ist einfaches mechanisches Einrühren.

Die Partikel können prinzipiell sowohl in Pulverform als auch in Form von Suspensionen oder Dispersionen in geeigneten, vorzugsweise gegenüber Isocyanaten inerten Lösungsmitteln eingesetzt werden. Bevorzugt ist der Einsatz der Partikel in Form von Dispersionen in organischen Lösungsmitteln, wobei die Lösungsmittel bevorzugt inert gegenüber Isocyanaten sein sollen.

Für die Organosole geeignete Lösemittel sind Methanol, Ethanol, i-Propanol, Aceton, 2-Butanon, Methyl-isobutylketon, sowie die an sich in der Polyurethanchemie gängigen Lösemittel wie Butylacetat, Ethylacetat, 1-Methoxy-2-propylacetat, Toluol, 2-Butanon, Xylol, 1,4-Dioxan, Diacetonalkohol, N-Methylpyrrolidon, Dimethylacetamid, Dimethylformamid, Dimethylsulfoxid, Methylethylketon oder beliebige Gemische solcher Lösungsmittel.

Bevorzugte Lösungsmittel hierbei sind die an sich in der Polyurethanchemie gängigen Lösemittel wie Butylacetat, Ethylacetat, 1-Methoxy-2-propylacetat, Toluol, 2-Butanon, Xylol, 1,4-Dioxan, Diacetonalkohol, N-Methylpyrrolidon, Dimethylacetamid, Dimethylformamid, Dimethylsulfoxid, Methylethylketon oder beliebige Gemische solcher Lösungsmittel.

Besonders bevorzugte Lösungsmittel sind Lösungsmittel wie Butylacetat, 1-Methoxy-2-propylacetat, Ethylacetat, Toluol, Xylol, Solvent Naphta (Kohlenwasserstoffgemisch) sowie deren Mischungen. Ketonische Lösungsmittel wie Methylethylketon eignen sich als Prozeßlösemittel, jedoch nicht als Lösungsmittel für das fertige Produkt.

In Bezug auf den Gehalt an später zur Vernetzung zur Verfügung stehenden NCO-Gruppen hat es sich als vorteilhaft erwiesen, auf Alkohole als Lösemittel sowohl für die Partikeldispersionen als auch als Prozesslösemittel während der Polyisocyanatmodifizierung zu verzichten, da hierbei ein vergleichsweise höherer Abbau von NCO-Gruppen während der Lagerung der daraus hergestellten nanopartikelmodifizierten Polyisocyanate zu beobachten ist. Werden die Polyisocyanate in einem zusätzlichen Schritt blockiert, so können auch Alkohole als Lösungsmittel eingesetzt werden.

In einer bevorzugten Ausführungsform der Erfindung werden als Partikel in c) anorganische Oxide, Mischoxide, Hydroxide, Sulfate, Carbonate, Carbide, Boride und Nitride von Elementen der II bis IV Hauptgruppe und/oder Elemente der I bis VIII Nebengruppe des Periodensystems einschließlich der Lanthanide verwendet. Besonders bevorzugte Partikel der Komponente c) sind Siliziumoxid, Aluminiumoxid, Ceroxid, Zirkonoxid, Nioboxid und Titanoxid. Ganz besonders bevorzugt sind Siliziumoxid-Nanopartikel.

Die in c) eingesetzten Partikel weisen bevorzugt mittlere Partikelgrößen mittels dynamischer Lichtstreuung in Dispersion bestimmt als Z-Mittelwert von 5 bis 100 nm, besonders bevorzugt 5 bis 50 nm auf.

Bevorzugt weisen wenigstens 75 %, besonders bevorzugt wenigstens 90 %, ganz besonders bevorzugt wenigstens 95 % aller in c) eingesetzten Partikel die vorstehend definierten Größen, auf.

Bevorzugt werden die Partikel oberflächenmodifiziert eingesetzt. Falls die in c) eingesetzten Partikel oberflächenmodifiziert sein sollen, werden sie vor Einarbeitung in das modifizierte Polyisocyanat beispielsweise unter Silanisierung umgesetzt. Diese Methode ist literaturbekannt und beispielsweise in DE-A 19846660 oder WO 03/44099 beschrieben.

Weiterhin können die Oberflächen adsorptiv/assoziativ durch Tenside mit Kopfgruppen entsprechender Wechselwirkungen zu den Teilchenoberflächen oder Blockcopolymere modifiziert werden, wie beispielsweise in WO 2006/008120 bzw. Foerster, S. & Antonietti, M., Advanced Materials, 10, no. 3, (1998) 195 modifiziert werden.

Bevorzugte Oberflächenmodifizierung ist die Silanisierung mit Alkoxysilanen und/oder Chlorsilanen. Ganz besonders bevorzugt handelt es sich um Silane, die neben den Alkoxygruppen inerte Alkyl- oder Aralkylreste aber keine weiteren funktionellen Gruppen tragen.

Beispiele kommerzieller Partikeldispersionen, wie sie sich für c) eignen sind Organosilicasol™ (Nissan Chemical America Corporation, USA), Nanobyk^{®} 3650 (BYK Chemie, Wesel, Deutschland), Hanse XP21/1264 oder Hanse XP21/1184 (Hanse Chemie, Hamburg, Deutschland), HIGHLINK^{®} NanO G (Clariant GmbH, Sulzbach, Deutschland). Geeignete Organosole weisen einen Feststoffgehalt von 10 bis 60 Gew.-%, bevorzugt 15 bis 50 Gew.-% auf.

Der Gehalt der in c) eingesetzten Partikel (gerechnet als Feststoff) bezogen auf das Gesamtsystem aus modifiziertem Polyisocyanat und Partikeln beträgt typischerweise 1 bis 70 Gew.-%, bevorzugt 5 bis 60, besonders bevorzugt 5 bis 40 Gew.-%, ganz besonders bevorzugt 5 bis 20 Gew.-%.

Der Feststoffgehalt erfindungsgemäßer, nanopartikelhaltiger PIC beträgt 20 bis 100 Gew.-%, bevorzugt 60 bis 100 Gew.-%, besonders bevorzugt 80 bis 100 Gew.-%. Eine ganz besonders bevorzugte Form ergibt 90 bis 100 %.

Werden Feststoffgehalte von 100 % für lösemittelfreie Polyisocyanate angestrebt, so liegt der Gehalt der in c) eingesetzten Partikel (gerechnet als Feststoff) bezogen auf das Gesamtsystem aus modifiziertem Polyisocyanat und Partikeln < 30 Gew.-%, bevorzugt < 20 Gew.-%, ganz besonders bevorzugt < 12 Gew.-%.

Die erfindungsgemäßen nanopartikelmodifizierten, hydrophilen Polyisocyanatgemische B) stellen transparente Produkte der vorstehend genannten Zusammensetzung dar, die gegebenenfalls auch in Lösemitteln, wie z. B. den oben genannten üblichen Lacklösemitteln, gelöster Form vorliegen können.

Gegebenenfalls können nanopartikelmodifizierte Polyisocyanatgemische B) auch aus Mischungen hydrophiler und hydrophober Polyisocyanate bestehen bzw. nanopartikelmodifizierte hydrophile Polyisocyanate mit hydrophoben Polyisocyanaten oder nanopartikelmodifizierte hydrophobe Polyisocyanate mit hydrophilen Polyisocyanaten kombiniert werden. In solchen Mischungen übernehmen die hydrophilierten Polyisocyanate die Funktion eines Emulgators für den nachträglich zugemischten Anteil an nichthydrophilen Polyisocyanaten.

Die in den erfindungsgemäßen Beschichtungsmitteln eingesetzte, gegebenenfalls in einem inerten Lösemittel gelöst vorliegende Härterkomponente B) weist bei 23 °C im allgemeinen eine Viskosität von 50 - 10000, vorzugsweise 50 - 2000 mPas (D = 40) auf. Die Menge an Lösemittel in der Härterkomponente wird dabei maximal so bemessen, daß in den letztendlich erhaltenen erfindungsgemäßen wäßrigen Beschichtungsmitteln bezogen auf den Festkörpergehalt maximal 50 Gew.-%, bevorzugt maximal 30 Gew.-%, besonders bevorzugt maximal 10 Gew.-% an organischen Lösemitteln vorliegt, wobei auch das gegebenenfalls in den Harzdispersionen A) bereits enthaltene Lösemittel mit in die Berechnung eingeht. Geeignete Lösemittel sind beispielsweise die üblichen Lacklösemittel, wie sie bereits oben bei der Herstellung der Härterkomponente B) beispielhaft beschrieben sind.

Zur Herstellung der wäßrigen Beschichtungsmittel wird die Härterkomponente B) in der wäßrigen Harzkomponente A) emulgiert. Dabei werden Harzdispersion A) und Härterkomponente B) in solchen Mengen mit einander kombiniert, daß auf jede Hydroxyl- oder Aminogruppe der Komponente A) von 0,5 bis 2, bevorzugt von 0,6 bis 1,8 und besonders bevorzugt von 0,7 bis 1,5 Isocyanatgruppen der Komponente B) entfallen. Bei Verwendung nichtfunktioneller, d. h. gegenüber Isocyanaten keine reaktiven Gruppen tragender Harzdispersionen wird die Härterkomponente im allgemeinen in Mengen von bis zu 20 Gew.-%, bevorzugt bis zu 10 Gew.-%, bezogen auf die Gesamtmenge an Harzdispersion A) und Härterkomponente B) eingesetzt.

Bevorzugt werden bezogen auf die Komponente A) und B) 30 bis 80 Gew.-% der wässrigen, hydroxy- und/oder aminofunktionellen Harzdispersion A) eingesetzt, besonders bevorzugt 40 bis 70 Gew.-%.

Bevorzugt werden bezogen auf die Komponente A) und B) 20 bis 80 Gew.-% des nanopartikelmodifizierten Polyisocyanates B) eingesetzt, besonders bevorzugt 20 bis 60 Gew.-% ganz besonders bevorzugt 30 bis 55 Gew.-%.

Der Mischung aus A) und B), bevorzugt jedoch vor der Zugabe der Komponente B) können der Komponente A) oder B), besonders bevorzugt jedoch A), die üblichen Hilfs- und Zusatzmittel C) sowie Pigmente D) und Lacklösungsmittel E) der Lacktechnologie einverleibt werden. Die gewünschte Verarbeitungsviskosität wird durch Zugabe von Wasser eingestellt.

Als Hilfs- und Zusatzmittel C) können beispielsweise Entschäumer, Emulgatoren, Dispergierhilfsmittel Verdicker, Härtungskatalysatoren, Farbstoffe, Mattierungsmittel, Flammschutzmittel, Hydrolyseschutzmittel, Mikrobizide, Algizide, Verlaufshilfsmittel, Antioxidantien, Lichtschutzmittel, Wasserfänger, Thixotropieträger, Netzmittel, Entlüftungsmittel und auch Haftvermittler mitverwendet werden. Diese Hilfs- und Zusatzmittel C) werden je nach den Erfordernissen der durch die Applikation der Beschichtung zu lösenden Probleme und ihrer Verträglichkeit in die Komponente A) und/oder B) eingemischt. Wasserhaltige oder stark alkalische reagierende Zusatzstoffe sollten beispielsweise nicht der Polyisocyanatkomponente B) sondern dem Bindemittel A) zugemischt werden.

Geeignete Härtungskatalysatoren für die erfindungsgemäßen Beschichtungsmittel sind beispielsweise die aus der Polyurethanchemie bekannten Verbindungen zur Beschleunigung von Isocyanatreaktionen, wie z. B. die bekannten Zinn- oder Wismutverbindungen und tertiären Amine, wie sie beispielsweise in "Kunststoff Handbuch 7, Polyurethane" Carl-Hanser-Verlag, München - Wien, 1984, S. 97-98, näher beschrieben sind. Bevorzugt sind Zinn- oder Wismutverbindungen. Derartige Katalysatoren können, falls überhaupt, in Mengen von bis zu 2 Gew.-%, bezogen auf das Gewicht des aus den Einzelkomponenten A), gegebenenfalls B) und C) bestehenden Bindemittels eingesetzt werden.

Als Haftvermittler können Silane eingesetzt werden. Bevorzugter Haftvermittler ist Glycidoxypropyltrimethoxysilan.

In den erfindungsgemässen Beschichtungsmitteln als Hilfs- und Zusatzmittel C) gegebenenfalls ebenfalls mitzuverwendende Mattierungsmittel, Flammschutzmittel, Hydrolyseschutzmittel, Mikrobizide, Algizide, Verlaufshilfsmittel, Antioxidantien, Lichtschutzmittel, Wasserfänger, Thixotropieträger, Netzmittel oder Entlüftungsmittel sind beispielsweise in "Lehrbuch der Lacke und Beschichtungen, Band III., Lösemittel, Weichmacher, Additive, Zwischenprodukte", H. Kittel, Verlag W.A. Colomb in der Heenemann GmbH, Berlin-Oberschwandorf, 1976, S. 237-398, beschrieben. Als Wasserfänger wirkende Trockenmittel sind beispielsweise in "kunststoff Handbuch 7, Polyurethane", Carl-Hanser-Verlag, München - Wien, 1983, S. 545 näher beschrieben. Bevorzugt eingesetzte derartiger Hilfs- und Zusatzmittel sind Verlaufshilfsmittel, Verdickungsmittel/Thixotropieträger, Entlüftungsmittel und Haftvermittler.

Die Gesamtmenge derartiger weiterer Hilfs- und Zusatzstoffe C) beträgt bevorzugt bis zu 30 Gew.-%, besonders bevorzugt bis zu 20 % bezogen auf das aus den Einzelkomponenten A), gegebenenfalls B) und C) bestehende Bindemittel.

Geeignete Füllstoffe sind beispielsweise Stein- oder Kunststoffgranulate, Glaskugeln, Sand, Kork, Kreide oder Talcum. Bevorzugte Füllstoffe sind Kreide oder Talcum. Geeignete Pigmente sind beispielsweise Titandioxid, Zinkoxid, Eisenoxide, Chromoxide oder Russe. Eine ausführliche Übersicht über Pigmente für Anstrichstoffe gibt das "Lehrbuch der Lacke und Beschichtungen, Band II, Pigmente, Füllstoffe, Farbstoffe", Kittel, Verlag W.A. Colomb in der Heenemann GmbH, Berlin-Oberschwandorf, 1974, S. 17-265. Bevorzugt wird als Pigment Titandioxid eingesetzt. Die beispielhaft genannten Füllstoffe und Pigmente können, falls überhaupt, in Mengen von bis zu 95 Gew.-% bevorzugt bis zu 80 Gew.-% bezogen auf das aus den Einzelkomponenten A), gegebenenfalls B) und C) bestehende Bindemittelgemisch eingesetzt werden.

Geeignete Lösungsmittel E) sind beispielsweise die oben genannten, gegebenenfalls bei der Herstellung der als Polyisocyanatkomponente B) besonders geeigneten üblichen inerten Lacklösungsmittel. Bevorzugt werden als Lacklösungsmittel Methoxypropylacetat, 3-Methoxy-1-Butylacetat, Propylen-n-Butylether, Dibasic Ester und Solvent Naphta eingesetzt, besonders bevorzugt sind Methoxypropylacetat, 3-Methoxy-1-Butylacetat, Propylen-n-Butylether, Dibasic Ester. Falls überhaupt, kommen derartige Lacklösungsmittel in den erfindungsgemäßen Beschichtungsmitteln in einer Menge von bis zu 50 %, vorzugsweise bis zu 30 %, besonders bevorzugt bis zu 20 %, bezogen auf die Gesamtmenge der Komponenten A) bis C) zum Einsatz.

Die in den erfindungsgemäßen Beschichtungsmitteln eingesetzten Komponenten A) bis E) können über übliche Dispergiertechniken eingearbeitet werden wie z. B. manuell oder via Rotor-Stator-Systeme, Ultraschalltechniken, Perlmühlen oder Strahldispergier-Apparaturen.

In den Fällen hydrophiler Polyisocyanate als Härterkomponente B) reichen einfache Emulgiertechniken, z. B. mit einem mechanischen Rührer, oder oftmals auch eine einfache Mischung der beiden Komponenten per Hand aus, um Beschichtungen mit sehr guten Eigenschaften zu erzielen. Selbstverständlich können aber auch Mischtechniken mit höherer Scherenergie, wie z.B. Strahldispergierung (Farbe & Lack 102/3, 1996, S. 88 - 100) eingesetzt werden.

Die so erhaltenen erfindungsgemäßen Beschichtungsmittel eignen sich für alle Einsatzgebiete, in denen Beschichtungen mit erhöhtem Eigenschaftsprofil Verwendung finden, wie z. B. zur Beschichtung von mineralischen Baustoffen, Straßenbelägen, Holz und Holzwerkstoffen, metallischen Oberflächen, Kunststoffen, Glas oder Papier, außerdem zur Verklebung diverser Werkstoffe. Sie können insbesondere als Grundierungen, Füller, pigmentierte Decklacke und Klarlacke im Bereich Autoreparatur- oder Großfahrzeuglackierung eingesetzt werden. Besonders geeignet sind die Beschichtungsmittel für Anwendungen, in denen ein verbesserter Korrosionsschutz erforderlich ist.

Die erfindungsgemäßen Beschichtungsmittel können nach den unterschiedlichsten Spritzverfahren, wie z. B. Luftdruck-, Airless- oder Elektrostatik-Spritzverfahren unter Verwendung von Ein- oder Zweikomponenten-Spritzanlagen, aber auch durch Streichen, Rollen oder Rakeln appliziert werden.

Die Trocknung und Aushärtung der Beschichtungen erfolgt im allgemeinen unter normalen Temperaturbedingungen, d. h. ohne Erhitzung der Beschichtung. Die erfindungsgemäßen Bindemittelkombinationen können jedoch auch zur Herstellung von Beschichtungen eingesetzt werden, die nach Applikation bei erhöhter Temperatur, z. B. bei 40 - 250 °C, vorzugsweise 40 - 150 °C und insbesondere bei 40 bis 100 °C getrocknet und ausgehärtet werden.

Erfindungsgemäße Beschichtungsmittel enthaltend nanomodifizierte Härterkomponenten B) zeichnen sich durch sehr gute Korrosionsschutz- und UV-Beständigkeiten sowie höhere Härte und ggf. besseres Substrat-Haftvermögen im Vergleich zu den herkömmlichen Beschichtungen aus.

### Beispiele:

Soweit nicht abweichend vermerkt, sind die Prozentangaben als Gewichtsprozent zu verstehen.

Die Bestimmung der Hydroxylzahl (OH-Zahl) erfolgte gemäß DIN 53240-2.

Die Viskositätsbestimmung erfolgte mittels Rotationsviskosimeter "RotoVisco 1" der Fa. Haake, Deutschland gemäß DIN EN ISO 3219/A.3.

Die Bestimmung der Säurezahl erfolgte gemäß DIN EN ISO 2114.

Die Farbzahlbestimmung (APHA) erfolgte gemäß DIN EN 1557.

Die Bestimmung des NCO-Gehaltes erfolgte gemäß DIN EN ISO 11909.

Die Bestimmung des Restmonomerengehaltes erfolgte gemäß DIN EN ISO 10 283
Butoxyl: Abkürzung für 3-Methoxy-n-butylacetat
Organosilicasol™ MEK-ST: kolloidales Silica dispergiert in Methylethylketon, Teilchengröße 10-15 nm, 30 wt% SiO₂, < 0,5 wt% H₂O, < 5 mPa s Viskosität, Nissan Chemical America Corporation, USA.
Dynasylan^{®} 1189: N-(n-Butyl)-3-Aminopropyltrimethoxysilan, Fa. Degussa / Evonik AG, Deutschland.
Surfynol^{®} 104 BC: nichtionisches oberflächenaktives Tensid, Fa. AirProducts, Deutschland.
Borchigel^{®} PW 25, Verdickungsmittel, Fa OMG Borchers GmbH, Deutschland.
Baysilone^{®} LA 200, Entschäumer/Entlüftungsmittel, Fa OMG Borchers GmbH, Deutschland.
Baysilone^{®} 3468, Netzmittel, Fa OMG Borchers GmbH, Deutschland.
Borchigen^{®} SN 95: Netz- und Dispergieradditiv, Fa OMG Borchers GmbH, Deutschland.
Tronox^{®} R-KB-4: Titandioxidpigment, Fa.Tronox Inc., Deutschland.
Tinuvin^{®} 292, 1130 : Lichtschutzmittel, Fa. Ciba AG, Schweiz.
Dynasylan^{®} GLYMO: 3-Glycidyloxypropyltrimethoxysilan, Fa. Degussa / Evonik AG, Deutschland.
Bayhydrol^{®} XP 2470: Wasserverdünnbare, OH-funktionelle Polyacrylatdispersion, Lieferform ca. 45%ig in Wasser/Solventnaphtha® 100/Dowanol® PnB, neutralisiert mit Dimethylethanolamin/Triethanolamin, Viskosität bei 23 °C 2000 ± 500 mPa·s, OH-Gehalt ca. 3,9 %, Säurezahl ca. 10 mg KOH/g (Bayer MaterialScience AG/Leverkusen, Deutschland)
Bayhydrol^{®} XP 2645 Wasserverdünnbare, OH-funktionelle Polyacrylatdispersion, Lieferform ca. ca. 43 %ig in Wasser/Solventnaphtha 100/Dowanol® PnB, neutralisiert mit Dimethylethanolamin, Viskosität bei 23 °C 500 - 4.000 mPa·s, OH-Gehalt ca. 4,5 %, Säurezahl ca. 9 mg KOH/g (Bayer MaterialScience AG/Leverkusen, Deutschland)
Bayhydrol^{®} XP 2695 Wasserverdünnbare, OH-funktionelle Polyacrylatdispersion, Lieferform ca. ca. 41 %ig in Wasser/1-Butoxy-2-propanol, neutralisiert mit Triethanolamin/Dimethylethanolamin (3:1), , Viskosität bei 23 °C ca. 2500 mPa·s, OH-Gehalt ca. 5,0 %, Säurezahl ca. 9,4 mg KOH/g (Bayer MaterialScience AG/Leverkusen, Deutschland)

### Bestimmung der Teilchengröße

Die Teilchengrößen wurden mittels Dynamischer Lichtstreuuung mit einem HPPS particle size analyzer (Fa. Malvern, Worcestershire, UK) bestimmt. Die Auswertung erfolgte über die Dispersion Technology Software 4,10. Um Mehrfachstreuung zu vermeiden wurde eine hochverdünnte Dispersion der Nanopartikel hergestellt. Ein Tropfen einer verdünnten Nanopartikeldispersion (ca. 0,1 - 10 %) wurde in eine Küvette enthaltend ca. 2 ml des gleichen Lösemittels wie die Dispersion gegeben, geschüttelt und im HPPS analyzer bei 20 bis 25 °C vermessen. Wie dem Fachmann allgemein bekannt, wurden vorher die relevanten Parameter des Dispergiermediums - Temperatur, Viskosität und Brechungsindex - in die Software eingegeben. Im Falle organischer Lösemittel wurde eine Glasküvette eingesetzt. Als Resultat wurde eine Intensitäts- bzw. Volumen- Teilchendurchmesser-Kurve sowie der Z-Mittelwert für den Teilchendurchmesser erhalten. Es wurde darauf geachtet, daß der Polydispersitätsindex < 0,5 war.

### Pendeldämpfung (König) nach DIN EN ISO 1522 "Pendeldämpfungsprüfung"

***Kratzfestigkeit Laborwaschanlage (Nassverkratzung)*** nach DIN EN ISO 20566 "Beschichtungsstoffe - Prüfung der Kratzfestigkeit eines Beschichtungssystems mit einer Laborwaschanlage"
***Glanz-*/*Hazemessung nach*** DIN EN ISO 13803 "Bestimmung des Glanzschleiers von Beschichtungen (Haze) bei 20°" und DIN EN ISO 2813 "Bestimmung des Reflektometerwertes von Beschichtungen"

### Bestimmung der Lösemittelbeständigkeit

Mit dieser Prüfung wurde die Widerstandsfähigkeit eines ausgehärteten Lackfilmes gegen verschiedene Lösemittel festgestellt. Hierzu lässt man die Lösemittel für eine bestimmte Zeit auf die Lackoberfläche einwirken. Anschließend wird visuell und durch Abtasten mit der Hand beurteilt, ob und welche Veränderungen auf der Prüffläche aufgetreten sind. Der Lackfilm befindet sich in der Regel auf einer Glasplatte, andere Substrate sind ebenfalls möglich. Der Reagenzglasständer mit den Lösemitteln Xylol, 1-Methoxypropylacetat-2, Ethylacetat und Aceton (s.u.) wird so auf die Lackoberfläche aufgesetzt, dass die Öffnungen der Reagenzgläser mit den Wattepfropfen auf dem Film aufliegen. Wichtig ist die dadurch entstehende Benetzung der Lackoberfläche durch das Lösemittel. Nach der festgelegten Einwirkzeit der Lösemittel von 1 Minute und 5 Minuten wird der Reagenzglasständer von der Lackoberfläche entfernt. Anschließend werden die Lösemittelreste sofort mittels eines saugfähigen Papiers oder Textilgewebe entfernt. Man mustert nun sofort die Prüffläche nach behutsamem Kratzen mit dem Fingernagel visuell auf Veränderungen ab. Folgende Stufen werden unterschieden:

| | |
|---|---|
| 0 = | unverändert |
| 1 = | Spur verändert z.B. nur sichtbare Veränderung |
| 2 = | gering verändert z.B. mit Fingernagel spürbare Erweichung feststellbar |
| 3 = | merklich verändert z.B. mit dem Fingernagel starke Erweichung feststellbar |
| 4 = | stark verändert z.B. mit dem Fingernagel bis zum Untergrund |
| 5 = | zerstört z.B. ohne Fremdeinwirkung Lackoberfläche zerstört |

Die gefundenen Bewertungsstufen für die oben angegebenen Lösemittel werden in der folgenden Reihenfolge dokumentiert:

| | |
|---|---|
| Beispiel | 0000 (keine Veränderung) |
| Beispiel | 0001 (sichtbare Veränderung nur bei Aceton) |

Dabei beschreibt die Zahlenreihenfolge die Reihenfolger der ausgetesteten Lösungsmittel (Xylol, Methoxypropylacetat, Ethylacetat, Aceton)

### Bestimmung der Kratzfestigkeit mittels Hammertest (Trockenverkratzung)

Die Verkratzung wird mit einem Hammer (Gewicht: 800 g ohne Stiel) durchgeführt, an dessen flacher Seite Stahlwolle 00 befestigt wird. Dazu wird der Hammer vorsichtig im rechten Winkel auf die beschichtete Oberfläche aufgesetzt und ohne zu verkanten und ohne zusätzliche Körperkraft in einer Spur über die Beschichtung geführt. Es werden 10 Doppelhübe durchgeführt. Nach der Belastung mit dem Verkratzungsmedium wird die Prüffläche mit einem weichen Tuch gereinigt und anschließend der Glanz nach DIN EN ISO 2813 quer zur Verkratzungsrichtung gemessen. Es dürfen nur homogene Bereiche vermessen werden. Üblich sind Angaben zur Verkratzung dann in % Glanzerhalt oder-verlust relativ zum Ausgangsglanz
***Kondenswassertest nach*** DIN EN ISO 6270/2 CH, "Paints and varnishes - Determination of resistance to humidity"
***Salzsprühtest nach*** DIN EN ISO 9227 NSS: "Corrosion tests in artificial atmospheres - Salt spray tests"
***Beurteilung der Schäden jeweils*** nach DIN EN ISO 4628. "Paints and varnishes - Evaluation of degradation of coatings - Designation of quantity and size of defects, and of intensity of uniform changes in appearance"
***Bewitterung (CAM 180): UV Schnellbewitterung*** nach SAE J2527 CAM 180, "Performance Based Standard for Accelerated Exposure of Automotive Exterior Materials Using a Controlled Irradiance Xenon-Arc Apparatus"

### Ausgangspolyisocyanat a2)-1 enthaltend Emulgatortyp e4):

Eine Mischung aus 400 g (2,07 val) eines Isocyanuratgruppen-haltigen Polyisocyanates auf Basis von 1,6-Diisocyanatohexan (HDI) mit einem NCO-Gehalt von 21,7 %, einer mittleren NCO-Funktionalität von 3,5 (nach GPC), einem Gehalt an monomerem HDI von 0,1 % und einer Viskosität von 3000 mPas (23 °C) und 600 g (3,36 val) eines Iminooxadiazindiongruppen-haltigen Polyisocyanates auf Basis von HDI mit einem NCO-Gehalt von 23,5 %, einer mittleren NCO-Funktionalität von 3,1 (nach GPC), einem Gehalt an monomerem HDI von 0,2 % und einer Viskosität von 700 mPas (23 °C) werden zusammen mit 30 g (0,14 val) 3-(Cyclohexylamino)-propansulfonsäure (CAPS) und 18 g (0,14 mol) Dimethylcyclohexylamin unter trockenem Stickstoff 10 Stunden bei 80 °C gerührt. Nach Abkühlen auf Raumtemperatur liegt ein praktisch farbloses klares Polyisocyanatgemisch mit folgenden Kenndaten vor:

| | |
|---|---|
| Festgehalt: | 100 % |
| NCO-Gehalt: | 21,2 % |
| NCO-Funktionalität: | 3,2 |
| Viskosität (23 °C): | 3500 mPas |
| Farbzahl: | 60 APHA |

### Ausgangspolyisocyanat a2)-2 enthaltend Emulgatortyp e1):

870 g (4,50 val) des bei der Herstellung des Ausgangspolyisocyanates a2)-1 beschriebenen Isocyanuratgruppen-haltigen Polyisocyanates auf Basis von HDI werden bei 100 °C unter trockenem Stickstoff und Rühren vorgelegt, innerhalb von 30 min mit 130 g (0,37 val) eines auf Methanol gestarteten, monofunktionellen Polyethylenoxidpolyethers eines mittleren Molekulargewichtes von 350 versetzt und bei dieser Temperatur weiter gerührt, bis der NCO-Gehalt der Mischung nach etwa 2 h auf einen Wert von 17,4 % gefallen ist. Nach Abkühlen auf Raumtemperatur liegt ein farbloses, klares Polyisocyanatgemisch mit folgenden Kenndaten vor:

| | |
|---|---|
| Festgehalt: | 100 % |
| NCO-Gehalt: | 17,4 % |
| NCO-Funktionalität: | 3,2 |
| Viskosität (23 °C): | 2800 mPas |
| Farbzahl: | 40 APHA |

### Ausgangspolyisocyanat a2)-3 enthaltend Emulgatortyp e3):

910 g (4,70 val) des bei der Herstellung des Ausgangspolyisocyanates a2)-1 beschriebenen Isocyanuratgruppen-haltigen Polyisocyanates auf Basis von HDI werden bei 100 °C unter trockenem Stickstoff und Rühren vorgelegt, innerhalb von 30 min mit 90 g (0,18 val) eines auf Methanol gestarteten, monofunktionellen Polyethylenoxidpolyethers eines mittleren Molekulargewichtes von 500 versetzt und anschließend bei dieser Temperatur weitergerührt, bis der NCO-Gehalt der Mischung nach etwa 2 h auf den einer vollständigen Urethanisierung entsprechenden Wert von 18,7 % gefallen ist. Anschließend gibt man 0,01 g Zink-(II)-2-ethyl-1-hexanoat als Allophanatisierungskatalysator zu. Dabei steigt die Temperatur des Reaktionsgemisches aufgrund der freiwerdenden Reaktionswärme bis auf 106 °C an. Nach Abklingen der Exothermie, etwa 30 min nach Katalysatorzugabe, wird die Reaktion durch Zugabe von 0,01 g Benzoylchlorid abgebrochen und das Reaktionsgemisch auf Raumtemperatur abgekühlt. Es liegt ein praktisch farbloses klares Polyisocyanatgemisch mit folgenden Kenndaten vor:

| | |
|---|---|
| Festgehalt: | 100 % |
| NCO-Gehalt: | 18,2 % |
| NCO-Funktionalität: | 3,5 |
| Viskosität (23 °C): | 4000 mPas |
| Farbzahl: | 60 APHA |

### Ausganpspolyisocyanat a2)-4 enthaltend Emulgatortyp e3):

Nach dem für Ausgangspolyisocyanat a2)-3 beschriebenen Verfahren werden 860 g (4,44 val) des dort beschriebenen Isocyanuratgruppen-haltigen HDI-Polyisocyanates und 140 g (0,28 val) des dort beschriebenen Polyethylenoxidpolyethers in Gegenwart von 0,01 g Zink-(II)-2-ethyl-1-hexanoat als Allophanatisierungskatalysator zu einem farblosen klaren Polyisocyanatgemisch mit folgenden Kenndaten umgesetzt:

| | |
|---|---|
| Festgehalt: | 100 % |
| NCO-Gehalt: | 16,2 % |
| NCO-Funktionalität: | 4,0 |
| Viskosität (23 °C): | 6500 mPas |
| Farbzahl: | 60 APHA |

### Ausgangspolyisocyanat a2)-5 enthaltend Emulgatortyp e4):

Nach dem für Ausgangspolyisocyanat a2)-1 beschriebenen Verfahren werden 980 g (5,06 val) des dort beschriebenen Isocyanuratgruppen-haltigen HDI-Polyisocyanates, 20 g (0,09 val) CAPS, 11 g (0,09 mol) Dimethylcyclohexylamin zu einem farblosen klaren Polyisocyanatgemisch mit folgenden Kenndaten umgesetzt:

| | |
|---|---|
| Festgehalt: | 100 % |
| NCO-Gehalt: | 20,6 % |
| NCO-Funktionalität: | 3,4 |
| Viskosität (23 °C): | 5400 mPas |
| Farbzahl: | 40 APHA |

### Ausgangspolyisocyanat a2)-6 enthaltend Emulgatortyp e5):

890 g (4,60 val) des bei der Herstellung des Ausgangspolyisocyanates a2)-1 beschriebenen Isocyanuratgruppen-haltigen Polyisocyanates auf Basis von HDI werden 12 Stunden bei 80°C mit 110 g eines Emulgatorgemisches, bestehend aus 97 g eines ethoxylierten Tridecylalkoholphosphats (Rhodafac^{®} RS-710, Fa. Rhodia) und 13 g Dimethylcyclohexylamin als Neutralisationsamin, gerührt. Nach Abkühlen auf Raumtemperatur liegt ein farbloses klares Polyisocyanatgemisch mit folgenden Kenndaten vor:

| | |
|---|---|
| Festgehalt: | 100 % |
| NCO-Gehalt: | 19,3 % |
| NCO-Funktionalität: | 3,5 |
| Viskosität (23 °C): | 3000 mPas |
| Farbzahl: | 30 APHA |

### Ausgangspolyisocyanat a1) - 1

Isocyanuratgruppen-haltigen Polyisocyanates auf Basis von 1,6-Diisocyanatohexan (HDI) mit einem NCO-Gehalt von 23 ± 0,5 %, einem Gehalt an monomerem HDI von ≤ 0,2 %, einer Farbzahl < 40 und einer Viskosität von 1200 ± 300 mPas (23 °C).

### Ausgangspolyisocyanat a1) - 2

Iminooxadiazindiongruppen-haltiges Polyisocyanat auf Basis von HDI mit einem NCO-Gehalt von 23,5 ± 0,5 %, einer einem Gehalt an monomerem HDI von < 0,3 %, einer Farbzahl < 40 und einer Viskosität von 700 ± 100 mPas (23 °C)

### Beispiel 1

N-(3-Trimethoxysilylpropyl)asparaginsäurediethylester wurde, entsprechend der Lehre aus US-A 5 364 955, Beispiel 5, durch Umsetzung von äquimolaren Mengen 3-Aminopropyltrimethoxysilan mit Maleinsäurediethylester hergestellt.

### Beispiel 2

In einer Standard-Rührapparatur wurden 1287,5 g Ausgangspolyisocyanat a2)-1 in 700 g Methylethylketon bei Raumtemperatur vorgelegt und Stickstoff mit 2L/h übergeleitet. Dann wurden innerhalb von 2 h unter Rühren bei Raumtemperatur 112,5 g (0,05 val) des Alkoxysilans aus Beispiel 1 in 700 g Methylethylketon zugetropft, bis der theoretische NCO-Gehalt erreicht war. Die Temperatur wurde währenddessen bei maximal 40 °C gehalten.

1279,5 g des derart alkoxysilan-modifizierten Polyisocyanats wurden mit 220,5 g Nissan Organosol MEK-ST gemischt und am Rotationsverdampfer bei 60 °C und 120 mbar auf einen Feststoffgehalt von 100 % eingestellt.

Man erhielt ein transparentes, flüssiges Polyisocyanat mit folgenden Kennzahlen: Feststoffgehalt 100 Gew.-%, NCO-Gehalt 15,99 %, Viskosität 12.700 mPas (23 °C), Teilchengröße 54,2 nm, 10 % SiO2-Gehalt.

### Beispiel 3

In einer Standard-Rührapparatur wurden 1106,6 g Ausgangspolyisocyanat a2)-1 bei Raumtemperatur vorgelegt vorgelegt und Stickstoff mit 2L/h übergeleitet. Dann wurden innerhalb von 2 h bei Raumtemperatur 193,4 g (0,1 val) des Alkoxysilans aus Beispiel 1, bis der theoretische NCO-Gehalt erreicht war. Die Temperatur wurde währenddessen bei maximal 40 °C gehalten.

1080 g des derart alkoxysilan-modifizierten Polyisocyanats wurden mit 378,5 g Nissan Organosol MEK-ST gemischt und am Rotationsverdampfer bei 60 °C und 120 mbar auf einen Feststoffgehalt von 100 % eingestellt.

Man erhielt ein transluzentes, flüssiges Polyisocyanat mit folgenden Kennzahlen: Feststoffgehalt 100 Gew.-%, NCO-Gehalt 13,3 %, Viskosität 24.900 mPas (23 °C), Teilchengröße 54,6 nm, 10 % SiO2-Gehalt.

### Beispiel 4

In einer Standard-Rührapparatur wurden 466,1 g Ausgangspolyisocyanat a2-2 in 250 g Methylethylketon bei Raumtemperatur vorgelegt und Stickstoff mit 2L/h übergeleitet. Dann wurden innerhalb von 2 h unter Rühren bei Raumtemperatur 33,9 g (0,05 val) des Alkoxysilans aus Beispiel 1 in 250 g Methylethylketon zugetropft, bis der theoretische NCO-Gehalt erreicht war. Die Temperatur wurde währenddessen bei maximal 40 °C gehalten.

508,4 g des derart alkoxysilan-modifizierten Polyisocyanats wurden mit 91,6 g Nissan Organosol MEK-ST gemischt und am Rotationsverdampfer bei 60 °C und 120 mbar auf einen Feststoffgehalt von 100 % eingestellt.

Man erhielt ein transparentes, flüssiges Polyisocyanat mit folgenden Kennzahlen: Feststoffgehalt 100 Gew.-%, NCO-Gehalt 13,22 %, Viskosität 7.400 mPas (23 °C), Teilchengröße 31,4 nm, 10 % SiO2-Gehalt.

### Beispiel 5

In einer Standard-Rührapparatur wurden 465,0 g Ausgangspolyisocyanat a2)-3 in 250 g Methylethylketon bei Raumtemperatur vorgelegt und Stickstoff mit 2L/h übergeleitet. Dann wurden innerhalb von 2 h unter Rühren bei Raumtemperatur 34,99 g (0,05 val) des Alkoxysilans aus Beispiel 1 in 250 g Methylethylketon zugetropft, bis der theoretische NCO-Gehalt erreicht war. Die Temperatur wurde währenddessen bei maximal 40 °C gehalten.

937,2 g des derart alkoxysilan-modifizierten Polyisocyanats wurden mit 162,8 g Nissan Organosol MEK-ST gemischt und am Rotationsverdampfer bei 60 °C und 120 mbar auf einen Feststoffgehalt von 100 % eingestellt.

Man erhielt ein transparentes, flüssiges Polyisocyanat mit folgenden Kennzahlen: Feststoffgehalt 100 Gew.-%, NCO-Gehalt 13,5 %, Viskosität 17.100 mPas (23 °C), Teilchengröße 46,7 nm, 10 % SiO2-Gehalt.

### Beispiel 6

In einer Standard-Rührapparatur wurden 468,3 g Ausgangspolyisocyanat a2)-4 in 250 g Methylethylketon bei Raumtemperatur vorgelegt und Stickstoff mit 2L/h übergeleitet. Dann wurden innerhalb von 2 h unter Rühren bei Raumtemperatur 31,7 g (0,05 val) des Alkoxysilans aus Beispiel 1 in 250 g Methylethylketon zugetropft, bis der theoretische NCO-Gehalt erreicht war. Die Temperatur wurde währenddessen bei maximal 40 °C gehalten.

510 g des derart alkoxysilan-modifizierten Polyisocyanats wurden mit 90 g Nissan Organosol MEK-ST gemischt und am Rotationsverdampfer bei 60 °C und 120 mbar auf einen Feststoffgehalt von 100 % eingestellt.

Man erhielt ein transparentes, flüssiges Polyisocyanat mit folgenden Kennzahlen: Feststoffgehalt 100 Gew.-%, NCO-Gehalt 12,55 %, Viskosität 16.300 mPas (23 °C), Teilchengröße 34,6 nm, 10 % SiO2-Gehalt.

### Beispiel 7

In einer Standard-Rührapparatur wurden 472,7 g Ausgangspolyisocyanat a2)-5 in 250 g Methylethylketon bei Raumtemperatur vorgelegt und Stickstoff mit 2L/h übergeleitet. Dann wurden innerhalb von 2 h unter Rühren bei Raumtemperatur 27,3 g (0,05 val) Dynasilan 1189 in 250 g Methylethylketon zugetropft, bis der theoretische NCO-Gehalt erreicht war. Die Temperatur wurde währenddessen bei maximal 40 °C gehalten.

935 g des derart alkoxysilan-modifizierten Polyisocyanats wurden mit 165 g Nissan Organosol MEK-ST gemischt und am Rotationsverdampfer bei 60 °C und 120 mbar auf einen Feststoffgehalt von 100 % eingestellt.

Man erhielt ein transparentes, flüssiges Polyisocyanat mit folgenden Kennzahlen: Feststoffgehalt 100 Gew.-%, NCO-Gehalt 16,14 %, Viskosität 17.700 mPas (23 °C), Teilchengröße 68,9 nm, 10 % SiO2-Gehalt.

### Beispiel 8

In einer Standard-Rührapparatur wurden 467,3 g Ausgangspolyisocyanat a2)-6 in 350 g Butylacetat bei Raumtemperatur vorgelegt und Stickstoff mit 2L/h übergeleitet. Dann wurden innerhalb von 2 h unter Rühren bei Raumtemperatur 32,7 g (0,05 val) des Alkoxysilans aus Beispiel 1 in 150 g Butylacetat zugetropft, bis der theoretische NCO-Gehalt erreicht war. Die Temperatur wurde währenddessen bei maximal 40 °C gehalten.

466,8 g des derart alkoxysilan-modifizierten Polyisocyanats wurden mit 79,6 g Nissan Organosol MEK-ST gemischt und am Rotationsverdampfer bei 60 °C und 120 mbar auf einen Feststoffgehalt von 100 % eingestellt.

Man erhielt ein transparentes, flüssiges Polyisocyanat mit folgenden Kennzahlen: Feststoffgehalt 100 Gew.-%, NCO-Gehalt 13,16 %, Viskosität 7400 mPas (23 °C), Teilchengröße 21,4 nm, 10 % SiO2-Gehalt.

### Beispiel 9

In einer Standard-Rührapparatur wurden 466,1 g Ausgangspolyisocyanat a2)-2 in 250 g Methoxypropylacetat bei Raumtemperatur vorgelegt und Stickstoff mit 2L/h übergeleitet. Dann wurden innerhalb von 2 h unter Rühren bei Raumtemperatur 33,9 g (0,05 val) des Alkoxysilans aus Beispiel 1 in 250 g Methoxypropylacetat zugetropft, bis der theoretische NCO-Gehalt erreicht war. Die Temperatur wurde währenddessen bei maximal 40 °C gehalten.

481,6 g des derart alkoxysilan-modifizierten Polyisocyanats wurden mit 268,4 g Nissan Organosol MEK-ST gemischt und am Rotationsverdampfer bei 60 °C und 120 mbar auf einen Feststoffgehalt von 65 % eingestellt. Anschließend wurden 750 ml Methoxypropylacetat hinzugefügt und erneut am Rotationsverdampfer bei 60 °C und 120 mbar auf einen Feststoffgehalt von 65 % eingestellt.

Man erhielt ein transparentes, flüssiges Polyisocyanat mit folgenden Kennzahlen: Feststoffgehalt 69,1 Gew.-%, NCO-Gehalt 7,23 %, Viskosität 162 mPas (23 °C), Teilchengröße 29,2 nm, 26 % SiO2-Gehalt im Festkörper.

### Beispiel 10

In einer Standard-Rührapparatur wurden 397,5 g Ausgangspolyisocyanat a1)-1 in 250 g Butylacetat bei Raumtemperatur vorgelegt und Stickstoff mit 2L/h übergeleitet. Dann wurden innerhalb von 2 h unter Rühren bei Raumtemperatur 102,5 g (0,2 val) Dynasilan 1189 in 250 g Butylacetat zugetropft, bis der theoretische NCO-Gehalt erreicht war. Die Temperatur wurde währenddessen bei maximal 40 °C gehalten.

936 g des derart alkoxysilan-modifizierten Polyisocyanats wurden mit 164 g Nissan Organosol MEK-ST gemischt und am Rotationsverdampfer bei 60 °C und 120 mbar auf einen Feststoffgehalt von 100 % eingestellt.

Man erhielt ein transparentes, flüssiges Polyisocyanat mit folgenden Kennzahlen: Feststoffgehalt 100 Gew.-%, NCO-Gehalt 12,3 %, Viskosität 8100 mPas (23 °C), Teilchengröße 32,8 nm, 10 % SiO2-Gehalt im Festkörper.

### Beispiel 11

In einer Standard-Rührapparatur wurden 883,6 g Ausgangspolyisocyanat a1)-2 in 500 g Methylethylketon bei Raumtemperatur vorgelegt und Stickstoff mit 2L/h übergeleitet. Dann wurden innerhalb von 2 h unter Rühren bei Raumtemperatur 116,4 g (0,1 val) Dynasilan 1189 in 500 g Methylethylketon zugetropft, bis der theoretische NCO-Gehalt erreicht war. Die Temperatur wurde währenddessen bei maximal 40 °C gehalten.

939,4 g des derart alkoxysilan-modifizierten Polyisocyanats wurden mit 160,6 g Nissan Organosol MEK-ST gemischt und am Rotationsverdampfer bei 60 °C und 120 mbar auf einen Feststoffgehalt von 100 % eingestellt.

Man erhielt ein transparentes, flüssiges Polyisocyanat mit folgenden Kennzahlen: Feststoffgehalt 100 Gew.-%, NCO-Gehalt 15,9 %, Viskosität 3250 mPas (23 °C), Teilchengröße 40,2 nm, 10 % SiO2-Gehalt im Festkörper.

### Beispiel 12

In einer Standard-Rührapparatur wurden 501,8 g Ausgangspolyisocyanat a1)-1 in 275 g Methoxypropylacetat bei Raumtemperatur vorgelegt und Stickstoff mit 2L/h übergeleitet. Dann wurden innerhalb von 2 h unter Rühren bei Raumtemperatur 48,3 g (0,05 val) des Alkoxysilans aus Beispiel 1 in 275 g Methoxypropylacetat zugetropft, bis der theoretische NCO-Gehalt erreicht war. Die Temperatur wurde währenddessen bei maximal 40 °C gehalten.

290,4 g des derart alkoxysilan-modifizierten Polyisocyanats wurden mit 459,6 g Nissan Organosol MEK-ST gemischt und am Rotationsverdampfer bei 60 °C und 120 mbar auf einen Feststoffgehalt von 80 % eingestellt. Anschließend wurden 750 ml Methoxypropylacetat hinzugefügt und erneut am Rotationsverdampfer bei 60 °C und 120 mbar auf einen Feststoffgehalt von 80 % eingestellt.

Man erhielt ein transparentes, flüssiges Polyisocyanat mit folgenden Kennzahlen: Feststoffgehalt 62,5 Gew.-%, NCO-Gehalt 5,54 %, Viskosität 730 mPas (23 °C), Teilchengröße 25,6 nm, 50 % SiO2-Gehalt im Festkörper.

### Beispiel 13 Lackformulierungen Klarlack

| | 1 | 2 | 3 | 4 | 5 | 6 |
|---|---|---|---|---|---|---|
| **Polyol Bayhydrol-Type** | XP 2645 | XP 2645 | XP 2470 | XP 2470 | XP 2695 | XP 2695 |
| FK % | 43 | 43 | 45 | 45 | 41 | 41 |
| OH % | 4,5 | 4,5 | 3,9 | 3,9 | 5,00 | 5,00 |

| Polyisocyanat | a2)-5 | Bsp. 7 | a2)-5 | Bsp. 7 | a2)-5 | Bsp. 7 |
|---|---|---|---|---|---|---|
| FK % | 100 | 100 | 100 | 100 | 100 | 100 |
| NCO % | 20,6 | 16,14 | 20,6 | 16,14 | 20,6 | 16,14 |
| SiO2-Anteil im PIC % | 0 | 10 | 0 | 10 | 0 | 10 |
| NCO:OH | 1,5 | 1,5 | 1,5 | 1,5 | 1,5 | 1,5 |

| **Komponente 1** | | | | | | |
|---|---|---|---|---|---|---|
| XP 2645 | 89,0 | 100,0 | | | | |
| XP 2470 | | | 101,6 | 91,2 | | |
| XP 2695 | | | | | **99,9** | **88,4** |
| Surfynol 104 BC (Lff. 50%ig) | 2,3 | 2,3 | 2,3 | 2,3 | 2,3 | 2,3 |
| Borchigel PW 25 (Lff. 25%ig) | 0,3 | 0,3 | 0,3 | 0,3 | 0,3 | 0,3 |
| Baysilone 3468 (10%ig in BG gelöst) | 1,9 | 1,9 | 1,9 | 1,9 | 1,9 | 1,9 |
| Tinuvin 292 | 0,8 | 0,8 | 0,8 | 0,8 | 0,8 | 0,8 |
| Tinuvin 1130 | 1,6 | 1,6 | 1,6 | 1,6 | 1,6 | 1,6 |
| demin. H20 auf DIN 6 40 sek. | 10,1 | 10,0 | 10,0 | 8,1 | 10,8 | 9,3 |
| Gesamtkomp.1 | 106,0 | 116,9 | 118,5 | 106,2 | 117,6 | 104,6 |

| **Komponente 2** | | | | | | |
|---|---|---|---|---|---|---|
| Bsp 7 (80%ig in 3-Methoxy-n-butylacetat) | | 55,5 | | 46,0 | | 52,0 |
| Bsp. a2)-5 (80%ig in 3-Methoxy-n-butylacetat) | 38,7 | | 40,1 | | 46,1 | |
| **Gesamtkomp.1+2** | 144,7 | 172,4 | 158,6 | 152,2 | 163,7 | 156,5 |
| demin. H2O auf Spritzv. | 33,0 | 45,4 | 33,5 | 30,3 | 37,3 | 35,9 |
| Spritzviskosität DIN 4 (ca. 25 sek.) | 24,0 | 23,0 | 22,0 | 26,0 | 25,0 | 22,0 |
| Festkörper in % | 41,1 | 41,9 | 42,5 | 44,7 | 40,6 | 42,4 |
| **Nano-Anteil im Festkörper (%)** | **0,0** | **4,9** | **0,0** | **4,5** | **0,0** | **5,1** |

### Vergleichsbeispiele 13.1, 13.3, 13.5; erfindungsgemäße Beispiele 13.2, 13.4, 13.6

Die Polyolmischung wurde jeweils vorgelegt, Additive und Lichtschutzmittel zugewogen und unter Rühren gut vermischt. Anschließend wurde mit demineralisiertem Wasser auf Auslauf-Viskosität 40 sek .(DIN 6 Becher) eingestellt. Nach einem Tag Ruhezeit (zum Entlüften) wurden das Polyisocyanat / Lösemittelgemisch zugegeben, nochmals gut verrührt und mit demin. Wasser auf Spritzviskosität 25 sek. (DIN 4 Becher) eingestellt.

Der Lack wurde dann mit einer Fließbecherpistole Sata Digital RP 2 (Düse 1.4 mm) in 1,5 Kreuzgängen auf den vorbereiteten Untergrund appliziert. Nach einer Ablüftzeit von 30 min. wurde der Lack bei 60°C für 30 min. getrocknet. Die Trockenschichtdicke betrug jeweils ca. 50-60 µm.

### Beispiel 14 Lacktechnologische Prüfung Klarlacke aus Beispiel 13

| | 1 | 2 | 3 | 4 | 5 | 6 |
|---|---|---|---|---|---|---|
| Polyol | XP 2645 | XP 2645 | XP 2470 | XP 2470 | XP 2695 | XP 2695 |
| Polyisocyanat | a2)-5 | Bsp. 7 | a2)-5 | Bsp. 7 | a2)-5 | Bsp.7 |
| SiO2-Anteil im PIC % | 0 | 10 | 0 | 10 | 0 | 10 |

| **Trocknung [h]** | | | | | | |
|---|---|---|---|---|---|---|
| T1 | 2 | 2 | 1,5 | 1,5 | 1,5 | 1,5 |
| T2 | 5,5 | 5,5 | 4 | 5 | 4 | 4 |
| T3 | >6 | >6 | 5,5 | 5,5 | 5,5 | 5,5 |
| T4 | >6 | >6 | >6 | >6 | >6 | >6 |
| **Schichtdicke in µm** | 46,0 | 48,0 | 60,0 | 60,0 | 52,0 | 60,0 |
| Glanz | 86,6 | 86,9 | 86,6 | 87,0 | 82,9 | 85,1 |
| Haze | 12,7 | 8,9 | 8,0 | 6,1 | 29,5 | 21,6 |

| **Kratzfestigkeit Hammertest / Stahlwolle** | | | | | | |
|---|---|---|---|---|---|---|
| Restglanz nach Belastung | 37,8 | 45,3 | 47,4 | 52,5 | 47,5 | 53,0 |
| Restglanz nach Reflow (2h 60°C) | 75,4 | 80,3 | 77,6 | 79,3 | 72,1 | 81,5 |
| rel. Restglanz nach Belastung [%] | 43,6 | 52,1 | 54,7 | 60,3 | 57,3 | 62,3 |
| rel. Restglanz nach Reflow (2h 60°C) [%] | 87,1 | 92,4 | 89,6 | 91,1 | 87,0 | 95,8 |

| **Pendelhaerte R.T. in sek.** | | | | | | |
|---|---|---|---|---|---|---|
| 2h R.T. | 30 | 24 | 25 | 18 | 27 | 21 |
| Id R.T. | 175 | 175 | 115 | 78 | 146 | 125 |
| 7d R.T. | 184 | 184 | 110 | 73 | 128 | 113 |

| **Kratzfestigkeit Amtec Kistler** | | | | | | |
|---|---|---|---|---|---|---|
| Restglanz nach 10 Zyklen | 64,5 | 72,0 | 61,8 | 62,8 | 60,2 | 67,4 |
| Restglanz nach Reflow (2h 60°C) | 77,5 | 81,1 | 72,5 | 77,0 | 69,2 | 75,7 |
| rel. Restglanz nach Belastung [%] | 74,5 | 82,9 | 71,4 | 72,2 | 72,6 | 79,2 |
| rel. Restglanz nach Reflow (2h 60°C) [%] | 89,5 | 93,3 | 83,7 | 88,5 | 83,5 | 89,0 |

| **Chemikalienbeständigkeiten Note nach 2h \| 1d \| 7d** | | | | | | |
|---|---|---|---|---|---|---|
| Wasser (1h einwirken) | 2/2/2 | 2/2/2 | 2/2/2 | 2/2/2 | 2/2/2 | 2/2/2 |
| Xylol | 4/2/1 | 4/2/1 | 4/1/1 | 4/1,5/ 0,5 | 4/1/0 | 3/2/0 |
| MPA | 4/2/1 | 4/2/ 0,5 | 4/1/1 | 4/1,5/ 0,5 | 3,5/1,5 / 0 | 3/2/1 |
| Superbenzin | 4/2/ | 4/2/1 | 3/1,5/ | 3/1,5/ | 3/2/ | 2,5/2/ |
| | 0,5 | | 1 | 0,5 | 0,5 | 0 |
| Visuelle Beurteilung nach Lackieren | i.O. | i.O. | i.O. | i.O. | lei. Struktur | lei. Struktur |
| Visuelle Beurteilung nach Trocknung | i.O. | i.O. | i.O. | i.O. | lei. Struktur | lei. Struktur |

| | | | | | | |
|---|---|---|---|---|---|---|
| **Note Chemikalienbeständigkeit: 0-gut, 5-schlecht** | | | | | | |

### Vergleichsbeispiele 14.1,14.3, 14.5; erfindungsgemäße Beispiele 14.2, 14.4,14.6

Man erhält in allen Fällen klar-transparente haze-freie oder -arme Filme mit hervorragender Filmoptik und hohen Glanzgraden. Die Klarlacke enthaltend nano-modifizierte hydrophile Polyisocyanate lassen sich ohne Schwierigkeiten verarbeiten, die Nanopartikel haben keinerlei negativen Effekt auf Filmoptik und Glanz.

Die Trocken- sowie die Nassverkratzungsergebnisse der auf diese Weise nanomodifizierten Klarlacke (gemessen als relativer Glanzerhalt nach Belastung, s.o.) liegen um ca. 5-15 % oberhalb der jeweiligen unmodifizierten Variante. Ebenfalls verbessert sind die Beurteilungen zur Chemikalienbeständigkeit.

### Beispiel 15 Lackformulierungen Einschichtdecklack weiss

| | 1 | 2 | 3 | 4 | 5 | 6 |
|---|---|---|---|---|---|---|
| Polyol Bayhydrol-Type | XP 2470 | XP 2470 | XP 2470 | XP 2470 | XP 2470 | XP 2470 |
| FK% | 45 | 45 | 45 | 45 | 45 | 45 |
| OH% | 3,9 | 3,9 | 3,9 | 3,9 | 3,9 | 3,9 |
| Polyisocyanat | a2)-1 | Bsp. 2 | a2)-2 | Bsp. 4 | a2)-3 | Bsp. 5 |
| FK% | 100 | 100 | 100 | 100 | 100 | 100 |
| NCO% | 21,2 | 15,36 | 17,4 | 13,25 | 18,2 | 23 |
| SiO2-Anteil im PIC % | 0,0 | 10,0 | 0,0 | 10,0 | 0,0 | 10,0 |
| NCO:OH | 1,5 | 1,5 | 1,5 | 1,5 | 1,5 | 1,5 |

| **Komponente 1** | | | | | | |
|---|---|---|---|---|---|---|
| Bayhydrol XP 2470 | 288,1 | 249,6 | 264,7 | 231,7 | 270,1 | 293,5 |
| Surfynol 104 BC Lff. (50% BA) | 6,5 | 6,5 | 6,5 | 6,5 | 6,5 | 6,5 |
| Borchigel PW 25 Lff. (25% PG/H2O) | 0,9 | 0,9 | 0,9 | 0,9 | 0,9 | 0,9 |
| Baysilone LA 200 (10% BG) | 5,5 | 5,5 | 5,5 | 5,5 | 5,5 | 5,5 |
| Borchigen SN 95 Lff. (25% H2O) | 41,9 | 41,9 | 41,9 | 41,9 | 41,9 | 41,9 |
| Tronox R-KB-4 | 174,4 | 174,4 | 174,4 | 174,4 | 174,4 | 174,4 |
| Dest. H2O DIN 6 = 20 s | 15,0 | 20,7 | 11,0 | 14,7 | 11,4 | 20,1 |
| Gesamt Komp.1 | 532,3 | 499,5 | 504,9 | 475,6 | 510,7 | 542,8 |

| **Komponente 2** | | | | | | |
|---|---|---|---|---|---|---|
| a2)-1 (80%ig in Butoxyl) | 110,5 | | | | | |
| Bsp. 2 (80%ig in Butoxyl) | | 132,1 | | | | |
| a2)-2 (80%ig in Butoxyl) | | | 123,7 | | | |
| Bsp. 4 (80%ig in Butoxyl) | | | | 142,2 | | |
| a2)-3 (80%ig in Butoxyl) | | | | | 120,6 | |
| Bsp. 5 (80%ig in Butoxyl) | | | | | | 105,2 |
| a2)-4 (80%ig in Butoxyl) | | | | | | |
| Bsp. 6 (80%ig in Butoxyl) | | | | | | |
| a2)-5 (80%ig in Butoxyl) | | | | | | |
| Bsp. 7 (80%ig in Butoxyl) | | | | | | |
| Dynasilan Glymo | 4,4 | 4,4 | 4,4 | 4,4 | 4,4 | 4,4 |
| Tinuvin 292 | 2,2 | 2,2 | 2,2 | 2,2 | 2,2 | 2,2 |
| **Gesamt Komp. 1 + 2** | 649,4 | 638,2 | 635,2 | 624,4 | 637,9 | 654,6 |
| Demin. H2O Visk. auf MV | 20,0 | 22,3 | 28,2 | 28,3 | 26,3 | 20,4 |
| Spritzviskosität DIN4 in s | 25,0 | 25,0 | 24,0 | 25,0 | 23,0 | 25,0 |
| Festkörper in % | 58,7 | 59,2 | 57,0 | 58,4 | 57,4 | 57,7 |
| Nano-Anteil im Festkörper (%) | 0,0 | 2,4 | 0,0 | 2,6 | 0,0 | 1,9 |

| | | | | | | |
|---|---|---|---|---|---|---|
| **Butoxyl:** 3-Methoxy-n-Butylacetat | | | | | | |

### Beispiel 15 - Fortsetzung - Lackformulierungen Einschichtdecklack weiss

| | 7 | 8 | 9 | 10 |
|---|---|---|---|---|
| Polyol Bayhydrol-Type | XP 2470 | XP 2470 | XP 2470 | XP 2470 |
| FK% | 45 | 45 | 45 | 45 |
| OH% | 3,9 | 3,9 | 3,9 | 3,9 |
| Polyisocyanat | a2)-4 | Bsp. 6 | a2)-5 | Bsp. 7 |
| FK% | 100 | 100 | 100 | 100 |
| NCO% | 16,2 | 12,34 | 20,6 | 16,14 |
| SiO2-Anteil im PIC % | 0,0 | 10,0 | 0,0 | 10,0 |
| NCO:OH | 1,5 | 1,5 | 1,5 | 1,5 |

| **Komponente 1** | | | | |
|---|---|---|---|---|
| Bayhydrol XP 2470 | 256,1 | 223,2 | 284,7 | 255,6 |
| Surfynol 104 BC Lff. (50% BA) | 6,5 | 6,5 | 6,5 | 6,5 |
| Borchigel PW 25 Lff. (25% PG/H2O) | 0,9 | 0,9 | 0,9 | 0,9 |
| Baysilone LA 200 (10% BG) | 5,5 | 5,5 | 5,5 | 5,5 |
| Borchigen SN 95 Lff. (25% H2O) | 41,9 | 41,9 | 41,9 | 41,9 |
| Tronox R-KB-4 | 174,4 | 174,4 | 174,4 | 174,4 |
| Dest. H2O DIN 6 = 20 s | 10,0 | 10,1 | 14,7 | 14,7 |
| Gesamt Komp.1 | 495,3 | 462,5 | 528,6 | 499,5 |

| **Komponente 2** | | | | |
|---|---|---|---|---|
| a2)-1 (80%ig in Butoxyl) | | | | |
| Bsp. 2 (80%ig in Butoxyl) | | | | |
| a2)-2 (80%ig in Butoxyl) | | | | |
| Bsp. 4 (80%ig in Butoxyl) | | | | |
| a2)-3 (80%ig in Butoxyl) | | | | |
| Bsp. 5 (80%ig in Butoxyl) | | | | |
| a2)-4 (80%ig in Butoxyl) | 128,5 | | | |
| Bsp. 6 (80%ig in Butoxyl) | | 147,0 | | |
| a2)-5 (80%ig in Butoxyl) | | | 112,4 | |
| Bsp. 7 (80%ig in Butoxyl) | | | | 128,8 |
| Dynasilan Glymo | 4,4 | 4,4 | 4,4 | 4,4 |
| Tinuvin 292 | 2,2 | 2,2 | 2,2 | 2,2 |
| **Gesamt Komp. 1 + 2** | 630,4 | 616,1 | 647,6 | 634,9 |
| Demin. H2O Visk. auf MV | 29,3 | 30,5 | 20,3 | 21,5 |
| Spritzviskosität DIN4 in s | 24,0 | 23,0 | 22,0 | 24,0 |
| Festkörper in % | 57,2 | 58,6 | 58,7 | 59,7 |
| Nano-Anteil im Festkörper (%) | 0,0 | 2,7 | 0,0 | 2,3 |

| | | | | |
|---|---|---|---|---|
| **Butoxyl:** 3-Methoxy-n-butylacetat | | | | |

### Vergleichsbeispiele 15.1, 15.3, 15.5, 15.7, 15.9; erfindungsgemäße Beispiele 15.2, 15.4, 15.6, 15.8, 15.10

Die Polyolmischung wurde jeweils vorgelegt, Additive und Pigment zugewogen und unter Rühren gut vermischt. Die anschließende Anreibung des Pigments kann in einer Pulvermühle oder mittels eines Skandex-Apparats erfolgen, Anreibezeit 30-60 min. Anschließend wurde mit demineralisiertem Wasser auf Auslauf-Viskosität 20 sek .(DIN 6 Becher) eingestellt. Nach einem Tag Ruhezeit (zum Entlüften) wurden das Polyisocyanat / Lösemittelgemisch zugegeben, nochmals gut verrührt und mit demin. Wasser auf Spritzviskosität 25 sek. (DIN 4 Becher) eingestellt.

Der Lack wurde dann mit einer Fließbecherpistole Sata Digital RP 2 (Düse 1.4 mm) in 1,5 Kreuzgängen auf den vorbereiteten Untergrund appliziert. Nach einer Ablüftzeit von 30 min. wurde der Lack bei 60°C für 30 min. getrocknet. Die Trockenschichtdicke betrug jeweils ca. 50 µm. Die lacktechnologischen Prüfungen erfolgten nach 7 Tagen, die Korrosionsschutzprüfungen nach 10 d RT Lagerung.

### Beispiel 16a Lacktechnologische Prüfung Einschichtdecklacke weiss aus Beispiel 15 - Korrosionsschutz-Eigenschaften

| | 1 | 2 | 3 | 4 | 5 | 6 | 7 | 8 | 9 | 10 |
|---|---|---|---|---|---|---|---|---|---|---|
| Polyol | XP 2470 | XP 2470 | XP 2470 | XP 2470 | XP 2470 | XP 2470 | XP 2470 | XP 2470 | XP 2470 | XP 2470 |
| Polyisocyanat | a2)-1 | Bsp. 2 | a2)-2 | Bsp. 4 | a2)-3 | Bsp. 5 | a2)-4 | Bsp. 6 | a2)-5 | Bsp.7 |
| SiO2 in PIC in % | 0,0 | 10,0 | 0,0 | 10,0 | 0,0 | 10,0 | 0,0 | 10,0 | 0,0 | 10,0 |
| Schichtdicke µm | 48 | 51 | 43 | 50 | 49 | 50 | 43 | 47 | 43 | 49 |

| **Kondenswassertest** | | | | | | | | | | |
|---|---|---|---|---|---|---|---|---|---|---|
| n. 7 d | 1/1 | 0/0 | 1/1 | 1/1 | 1/1 | 1/1 | 1/1 | 1/1 | 1/1 | 1/1 |
| n. 14 d | 2/1-2 | 1/1 | 1/1-3 | 1/1 | 2/1-4 | 2/1-2 | 1/1 | 1/1-4 | 1/1 | 2/1 |
| n. 21 d | 3/1-2 | 2/1-2 | 3/1-3 | 1/1-2 | 2/1-4 | 3/1-2 | 1/1 | 1/1-4 | 2/1-2 | 3/1-2 |
| n. 35 d | 3/1-2 | 3/1-3 | 3/1-4 | 2/1-4 | 3/1-5 | 3/1-3 | 2/1-5 | 2/1-5 | 5/1-3 | 5/1-3 |
| n. 42 d | 3/1-2 | 3/1-3 | 3/1-4 | 2/1-4 | 3/1-5 | 3/1-3 | 2/1-5 | 3/1-5 | | |
| n. 49 d | 3/1-2 | 3/1-3 | 3/1-5 | 2/1-4 | 3/1-5 | 3/1-3 | 2/1-5 | 3/1-5 | | |
| n. 56 d | 3/1-3 | 3/1-3 | 3/1-5 | 2/1-5 | 3/1-5 | 3/1-5 | 3/1-5 | 3/1-5 | | |
| n. 70 d | 4/1-5 | 4/1-5 | 4/1-5 | 3/1-5 | 3/1-5 | 3/1-5 | 3/1-5 | 3/1-5 | | |
| n. 84 d | | | | 3/1-5 | 4/1-5 | 3/1-5 | 3/1-5 | 3/1-5 | | |
| n. 39 d | | | | | | | | | | |

| **Salzsprühtest** | | | | | | | | | | |
|---|---|---|---|---|---|---|---|---|---|---|
| n. 3 d | 5 | 3 | 7 | 3//1/1//1 | 8 | 5 | 7 | 5 | 10//1/1//1 | 5 |
| n. 10 d | 20 | 12 | 35 | 18//1/1//1 | 15 | 18//1/1-2/1 | 30 | 20//1/1-2//1 | 20//1/1//1 | 12 |
| n. 14 d | 30 | 18 | 50//1/1//1 | 22 | 22 | 25//1/1-5//1 | 50 | 25//1/1-2/1 | 30 | 20 |
| n. 21 d | 35 // 1/1-5 | 20 | 5/1-5//1 | 5/1-5//1 | 32 | 3/1-5//1 | 4/1-5 | 5/1-5//1 | 50//1/1-5//1 | 25//1/1-3 |
| n. 28 d | 4/1-5 | 30 | | | 3/1-5 | 3/1-5//1 | | | 5/1-5//1 | 30//1/1-5 |
| n. 35 d | | 3/1-5 | | | 4/1-5 | 5/1-5 | | | | 3/1-5 |
| n. 42 d | | 35//4/1-5 | | | | | | | | 4/1-5 |

### Beispiel 16b Lacktechnologische Prüfung Einschichtdecklacke weiss aus Beispiel 15 - sonstige Lackeigenschaften

| | 1 | 2 | 3 | 4 | 5 | 6 | 7 | 8 | 9 | 10 |
|---|---|---|---|---|---|---|---|---|---|---|
| **Polyol** | XP 2470 | XP 2470 | XP 2470 | XP 2470 | XP 2470 | XP 2470 | XP 2470 | XP 2470 | XP 2470 | XP 2470 |
| **Polyisocyanat** | a2)-1 | Bsp. 2 | a2)-2 | Bsp. 4 | a2)-3 | Bsp.5 5 | a2)-4 | Bsp. 6 | a2)-5 | Bsp. 7 |
| **SiO2 in PIC in %** | 0,0 | 10,0 | 0,0 | 10,0 | 0,0 | 10,0 | 0,0 | 10,0 | 0,0 | 10,0 |
| **Schichtdicke µm** | 48 | 51 | 43 | 50 | 49 | 50 | 43 | 47 | 43 | 49 |

| **Pendelhärte** | | | | | | | | | | |
|---|---|---|---|---|---|---|---|---|---|---|
| +2h | 71 | 59 | 39 | 25 | 46 | 47 | 36 | 27 | 91 | 61 |
| n. 1d | 132 | 121 | 93 | 64 | 103 | 78 | 85 | 72 | 148 | 124 |
| n.7d | 158 | 152 | 124 | 96 | 135 | 100 | 119 | 106 | 169 | 156 |

| **Beständigkeiten n. Tr., 1 d, 7d** | | | | | | | | | | |
|---|---|---|---|---|---|---|---|---|---|---|
| dest. H2O, 1h | 4-5/3/1 | 4-5/3/1 | 4-5/3/1 | 4-5/3/1 | 4-5/2/1 | 4-5/3/1 | 4-5/3/1 | 4-5/3/1 | 4-5/2/1 | 4-5/2/1 |
| Superbenzin, 10min | 5/3/2 | 5/3-4/2 | 5/4-5/2 | 5/4-5/1-2 | 5/3/2 | 5/4/2 | 5/4/2 | 5/4-5/2 | 5/2/2 | 5/2/2 |
| MPA, 10min | 5/3/1-2 | 5/3-4/1 | 5/4-5/1 | 5/4-5/1 | 5/3/1 | 5/4/2 | 5/4/1-2 | 5/4-5/2 | 5/2/1-2 | 5/2/1-2 |
| Xylol, 10min | 5/3/1-2 | 5/3-4/1 | 5/4-5/1 | 5/4-5/1 | 5/3/1 | 5/4/2 | 5/4/1-2 | 5/4-5/1-2 | 5/2/1-2 | 5/2/1-2 |
| Glanz 20° | 81,0 | 78,9 | 82,7 | 80,3 | 81,4 | 77,9 | 78,9 | 77,7 | 79,3 | 77,5 |
| Haze | 4,1 | 4,0 | 3,4 | 3,4 | 4,0 | 3,9 | 4,0 | 4,0 | 4,9 | 5,5 |

| **Hammerverkratzung Stahlw.** | | | | | | | | | | |
|---|---|---|---|---|---|---|---|---|---|---|
| Restglanz nach 10 DH | 79,5 | 78,7 | 81,3 | 79,6 | 80,1 | 76,0 | 78,1 | 77,0 | 77,9 | 77,1 |
| rel Restglanz nach 10 DH (%) | 98,1 | 99,7 | 98,3 | 99,1 | 98,4 | 97,6 | 99,0 | 99,1 | 98,2 | 99,5 |

### Beispiel 16c Lacktechnologische Prüfung Einschichtdecklacke weiss aus Beispiel 15 - UV Bewitterung CAM 180

| | 1 | 2 | 3 | 4 | 5 | 6 | 7 | 8 | 9 | 10 |
|---|---|---|---|---|---|---|---|---|---|---|
| Polyol | XP 2470 | XP 2470 | XP 2470 | XP 2470 | XP 2470 | XP 2470 | XP 2470 | XP 2470 | XP 2470 | XP 2470 |
| Polyisocyanat | a2)-1 | Bsp. 2 | a2)-2 | Bsp. 4 | a2)-3 | Bsp. 5 | a2)-4 | Bsp. 6 | a2)-5 | Bsp. 7 |
| SiO2 in PIC in % | 0,0 | 10,0 | 0,0 | 10,0 | 0,0 | 10,0 | 0,0 | 10,0 | 0,0 | 10,0 |
| Schichtdicke µm | 48 | 51 | 43 | 50 | 49 | 50 | 43 | 47 | 43 | 49 |

| **UV Schnellbewitterung CAM 180 Glanz 60°** | | | | | | | | | | |
|---|---|---|---|---|---|---|---|---|---|---|
| Ausgangswert | 92 | 91 | 92 | 92 | 93 | 91 | 89 | 90 | 92 | 91 |
| 250h | 90 | 89 | 88 | 86 | 89 | 88 | 86 | 87 | 92 | 90 |
| 500h | 90 | 88 | 87 | 86 | 89 | 88 | 86 | 86 | 91 | 89 |
| 750h | 89 | 87 | 87 | 86 | 88 | 87 | 84 | 84 | 90 | 88 |
| 1000h | 86 | 85 | 83 | 83 | 85 | 84 | 82 | 81 | 87 | 86 |
| 1250h | 87 | 85 | 84 | 83 | 86 | 86 | 82 | 83 | 88 | 86 |
| 1500h | 86 | 84 | 83 | 83 | 85 | 85 | 82 | 81 | 85 | 87 |
| 1750h | 84 | 82 | 81 | 81 | 84 | 83 | 80 | 78 | 86 | 85 |

| **delta E** | | | | | | | | | | |
|---|---|---|---|---|---|---|---|---|---|---|
| 250h | 0,1 | 0,1 | 0,2 | 0,1 | 0,1 | 0,3 | 0,3 | 0,3 | 0,1 | 0,2 |
| 500h | 0,2 | 0,1 | 0,3 | 0,1 | 0,1 | 0,3 | 0,4 | 0,2 | 0,1 | 0,1 |
| 750h | 0,4 | 0,3 | 0,4 | 0,3 | 0,3 | 0,4 | 0,4 | 0,4 | 0,3 | 0,4 |
| 1000h | 0,5 | 0,4 | 0,5 | 0,5 | 0,5 | 0,6 | 0,6 | 0,5 | 0,5 | 0,5 |
| 1250h | 0,5 | 0,5 | 0,6 | 0,4 | 0,5 | 0,6 | 0,6 | 0,5 | 0,5 | 0,4 |
| 1500h | 0,8 | 0,6 | 0,7 | 0,5 | 0,6 | 0,7 | 0,7 | 0,6 | 0,7 | 0,5 |
| 1750h | 0,7 | 0,5 | 0,6 | 0,5 | 0,6 | 0,6 | 0,6 | 0,6 | 0,6 | 0,5 |

### Vergleichsbeispiele 16.1, 16.3, 16.5, 16.7, 16.9; erfindungsgemäße Beispiele 16.2, 16.4, 16.6, 16.8, 16.10

Benotung Salzsprühtests: Blasen im Gesamtbereich des DIN-Schnitt (in mm) // Blasen: Menge / Größe // Rost (0-gut 5-schlecht)

Benotung Kondenswassertests: Blasen: Menge / Größe (0-gut 5-schlecht)

Man erhält in allen Fällen haze-freie Flme mit hervorragender Filmoptik und hohen Glanzgraden. Die Klarlacke enthaltend nano-modifizierte hydrophile Polyisocyanate lassen sich ohne Schwierigkeiten verarbeiten, die Nanopartikel haben keinerlei negativen Effekt auf Filmoptik und Glanz.

Deutlich sichtbar ist die Verbesserung der Korrosionsschutzeigenschaften der Lackfilme, insbesondere im Bereich Salzsprüh-Beständigkeit. Die Verwendung der erfindungsgemäßen nanomodifizierten Polyisocyanate führt hier im Vergleich zu den unmodifizierten zu wesentlich geringeren Schadensbildern bei gleicher Belastung, bzw. ermöglicht damit erheblich längere Belastungszeiten, bis ein entsprechendes Schadensbild vorliegt.

Die Ergebnisse der CAM 180 UV Schnellbewitterung (Beispiel 16c.1 bis 16c.10) zeigen keinerlei negative Einflüsse der erfindungsgemäßen nanomodifizierten Polyisocyanate auf die Vergilbungstendenz (delta E) oder den Glanzabfall der untersuchten Lackfilme. In einigen Fällen kann sogar ein leicht positiver Trend auf die Vergilbung des Lackfilms beobachtet werden.

### Beispiel 17 Lackformulierungen Einschichtdecklack weiss, hydrophobe Polyisocyanate a1)

Die Herstellung erfolgte analog Beispiel 15.

| | 1 | 2 | 3 | 4 |
|---|---|---|---|---|
| Polyol Bayhydrol-Type | XP 2470 | XP 2470 | XP 2470 | XP 2470 |
| FK% | 45 | 45 | 45 | 45 |
| OH% | 3,9 | 3,9 | 3,9 | 3,9 |
| Polyisocyanat | a1)-2 | Bsp. 11 | a1)-1 | Bsp. 10 |
| FK% | 100 | 100 | 100 | 100 |
| NCO% | 23,5 | 15,9 | 23 | 12,4 |
| SiO2-Anteil im PIC % | 0,0 | 10,0 | 0,0 | 10,0 |
| NCO:OH | 1,5 | 1,5 | 1,5 | 1,5 |

| **Komponente 1** | | | | |
|---|---|---|---|---|
| Bayhydrol XP 2470 | 300,0 | 253,8 | 297,5 | 223,7 |
| Surfynol 104 BC Lff. (50% BA) | 6,5 | 6,5 | 6,5 | 6,5 |
| Borchigel PW 25 Lff. (25% PG/H2O) | 0,9 | 0,9 | 0,9 | 0,9 |
| Baysilone LA 200 (10% BG) | 5,5 | 5,5 | 5,5 | 5,5 |
| Borchigen SN 95 Lff. (25% H2O) | 41,9 | 41,9 | 41,9 | 41,9 |
| Tronox R-KB-4 | 174,4 | 174,4 | 174,4 | 174,4 |
| Dest. H2O DIN 6 = 20 s | 18,3 | 12,7 | 13,6 | 10,0 |
| Gesamt Komp.1 | 547,5 | 495,7 | 540,3 | 462,9 |

| **Komponente 2** | | | | |
|---|---|---|---|---|
| a1)-2 (80%ig in Butoxyl) | 103,8 | | | |
| Bsp. 11 (80%ig in Butoxyl) | | 129,8 | | |
| a1)-1 (80%ig in Butoxyl) | | | 105,2 | |
| Bsp. 10 (80%ig in Butoxyl) | | | | 146,7 |
| Dynasilan Glymo | 4,4 | 4,4 | 4,4 | 4,4 |
| Tinuvin 292 | 2,2 | 2,2 | 2,2 | 2,2 |
| **Gesamt Komp. 1 + 2** | 657,9 | 632,1 | 652,1 | 616,2 |
| Demin. H2O Visk. auf MV | 15,9 | 17,8 | 15,9 | 19,0 |
| Spritzviskosität DIN4 in s | 21,0 | 23,0 | 23,0 | 26,0 |
| Festkörper in % | 59,5 | 61,6 | 60,1 | 63,0 |
| Nano-Anteil im Festkörper (%) | 0,0 | 2,3 | 0,0 | 2,6 |

### Vergleichsbeispiele 17.1,17.3; erfindungsgemäße Beispiele 17.2, 17.4

### Beispiel 18a Lacktechnologische Prüfung Einschichtdecklacke weiss aus Beispiel 17 - Korrosionsschutz-Eigenschaften

| | 1 | 2 | 3 | 4 |
|---|---|---|---|---|
| Polyol | XP 2470 | XP 2470 | XP 2470 | XP 2470 |
| Polyisocyanat | a1)-2 | Bsp. 11 | a1)-1 | Bsp. 10 |
| SiO2 in PIC in % | 0,0 | 10,0 | 0,0 | 10,0 |
| Schichtdicke µm | 51 | 52 | 55 | 49 |

| **Kondenswassertest** | | | | |
|---|---|---|---|---|
| n. 7 d | 0/0 | 1/1 | 1/1 | 1/1 |
| n. 14 d | 1/1 | 1/1 | 1/1 | 2/1 |
| n. 21 d | 2/1 | 1/1 | 1/1 | 2/1 |
| n. 35 d | 2/1 | 1/1 | 3/1-2 | 2/1-2 |
| n. 42 d | 3/1-5 | 2/1 | 3/1-2 | 2/1-2 |
| n. 49 d | 3/1-5 | 3/1-2 | 3/1-2 | 3/1-2 |
| n. 56 d | 3/1-5 | 3/1-3 | 3/1-2 | 3/1-3 |
| n. 70 d | 3/1-5 | 3/1-5 | 3/1-5 | 3/1-5 |
| n. 84 d n. 39 d | 3/1-5 | 3/1-5 | 4/1-5 | 3/1-5 |

| **Salzsprühtest** | | | | |
|---|---|---|---|---|
| n. 3 d | 15 | 15 | 15 | 10 |
| n. 10 d | 28 | 30 | 24 | 18 |
| n. 14 d | 35 // 1/1-3 | 35 // 1/1-2 | 30 | 22 // 1/1 |
| n. 21 d | 50 // 1/1-5 | 40 // 1/1-3 | 30 // 1/1-5 | 25 // 1/1 // 1 |
| n. 28 d | 5/1-5 | 45 // 1/1-5 | 3/1-5 | 50 // 1/1 // 1 |
| n. 35 d | | 3/1-5 | 4/1-5 | 3/1-5 |
| n. 42 d | | 4/1-5 | | 4/1-5 |

### Beispiel 18b Lacktechnologische Prüfung Einschichtdecklacke weiss aus Beispiel 17 - sonstige Eigenschaften

| | 1 | 2 | 3 | 4 |
|---|---|---|---|---|
| **Polyol** | XP 2470 | XP 2470 | XP 2470 | XP 2470 |
| **Polyisocyanat** | a1)-2 | Bsp. 11 | a1)-1 | Bsp. 10 |
| **SiO2 in PIC in %** | 0,0 | 10,0 | 0,0 | 10,0 |
| **Schichtdicke µm** | 51 | 52 | 55 | 49 |

| **Pendelhärte** | | | | |
|---|---|---|---|---|
| +2h | 64 | 38 | 51 | 26 |
| n. 1d | 142 | 112 | 118 | 86 |
| n. 7d | 169 | 160 | 150 | 153 |

| **Beständigkeiten n. Tr., 1d, 7d** | | | | |
|---|---|---|---|---|
| dest. H2O, 1h | 4-5/3/1 | 4-5/2/1 | 4-5/2-3/1 | 4-5/2/1 |
| Superbenzin, 10min | 5/3/2 | 5/3/2 | 5/2-3/2 | 5/4/2 |
| MPA, 10min | 5/3/1-2 | 5/3/1 | 5/2-3/1 | 5/4/2 |
| Xylol, 10min | 5/3/1-2 | 5/3/2 | 5/2-3/1 | 5/4/2 |
| Glanz 20° | 77,0 | 78,0 | 74,1 | 77,2 |
| Haze | 6,0 | 5,5 | 8,3 | 5,2 |

| **Hammerverkratzung Stahlw.** | | | | |
|---|---|---|---|---|
| Restglanz nach 10 DH | 76,4 | 76,0 | 73,1 | 75,3 |
| rel Restglanz nach 10 DH (%) | 99,2 | 97,4 | 98,7 | 97,5 |

### Beispiel 18c Lacktechnologische Prüfung Einschichtdecklacke weiss aus Beispiel 17 - UV Bewitterung CAM 180

| **2K WB Einschichtdecklack weiss Beispiel xx - Hydrophobe PICs** | 1 | 2 | 3 | 4 |
|---|---|---|---|---|
| Polyol | XP 2470 | XP 2470 | XP 2470 | XP 2470 |
| Polyisocyanat | a1)-2 | Bsp. 11 | a1)-1 | Bsp. 10 |
| SiO2 in PIC in % | 0,0 | 10,0 | 0,0 | 10,0 |
| Schichtdicke **µm** | 51 | 52 | 55 | 49 |

| **UV Schnellbewitterung CAM 180 Glanz 60°** | | | | |
|---|---|---|---|---|
| Ausgangswert | 91 | 91 | 91 | 92 |
| 250h | 90 | 89 | 87 | 89 |
| 500h | 89 | 88 | 87 | 88 |
| 750h | 89 | 88 | 88 | 87 |
| 1000h | 85 | 86 | 84 | 84 |
| 1250h | 87 | 83 | 86 | 84 |
| 1500h | 86 | 87 | 86 | 84 |
| 1750h | 85 | 84 | 85 | 82 |

| **delta E** | | | | |
|---|---|---|---|---|
| 250h | 0,1 | 0,0 | 0,0 | 0,1 |
| 500h | 0,1 | 0,3 | 0,1 | 0,2 |
| 750h | 0,3 | 0,4 | 0,3 | 0,4 |
| 1000h | 0,5 | 0,5 | 0,5 | 0,3 |
| 1250h | 0,5 | 0,5 | 0,5 | 0,4 |
| 1500h | 0,6 | 0,6 | 0,7 | 0,6 |
| 1750h | 0,5 | 0,5 | 0,5 | 0,5 |

### Vergleichsbeispiele 18.1, 18.3; erfindungsgemäße Beispiele 18.2, 18.4

Benotung Salzsprühtests: Blasen im Gesamtbereich des DIN-Schnitt (in mm) // Blasen: Menge / Größe // Rost (0-gut 5-schlecht)

Benotung Kondenswassertests: Blasen: Menge / Größe (0-gut 5-schlecht)

Die Klarlacke enthaltend nano-modifizierte hydrophile Polyisocyanate lassen sich ohne Schwierigkeiten verarbeiten, die Nanopartikel haben keinerlei negativen Effekt auf Filmoptik und Glanz.

Deutlich sichtbar ist die Verbesserung der Korrosionsschutzeigenschaften der Lackfilme, insbesondere im Bereich Salzsprüh-Beständigkeit. Die Verwendung der erfindungsgemäßen nanomodifizierten Polyisocyanate führt hier im Vergleich zu den unmodifizierten zu wesentlich geringeren Schadensbildern bei gleicher Belastung, bzw. ermöglicht damit erheblich längere Belastungszeiten, bis ein entsprechendes Schadensbild vorliegt.

Die Ergebnisse der CAM 180 UV Schnellbewitterung (Beispiel 18c.1 bis 18c.4) zeigen keinerlei negative Einflüsse der erfindungsgemäßen nanomodifizierten Polyisocyanate auf die Vergilbungstendenz (delta E) oder den Glanzabfall der untersuchten Lackfilme.

## Patentansprüche

1. Beschichtungsmittel umfassend
A) 10 bis 90 Gew.-% einer wäßrigen, hydroxy- und/oder aminofunktionellen Harzdispersion,
B) 10 bis 90 Gew.-% eines nanopartikelmodifizierten Polyisocyanates und
C) 0 bis 60 Gew.-% weiteren, in der Lacktechnologie bekannten Hilfs- und Zusatzmittel,
wobei die Prozentangaben auf Festkörper der Gesamtzusammensetzung bezogen sind.

2. Beschichtungsmittel gemäß Anspruch 1, **dadurch gekennzeichnet, dass** in A) hydroxyfunktionelle Harzdispersionen eingesetzt werden, die bezogen auf Festharz einen Gehalt an Hydroxylgruppen von 0,5 bis 7,0 Gew.-% und Säurezahlen von weniger als 50 mg KOH/g aufweisen.

3. Beschichtungsmittel gemäß Anspruch 1 oder 2, **dadurch gekennzeichnet, dass** in B) nanopartikelmodifizierte Polyisocyanatgemische auf Basis aliphatischer, cycloaliphatischer, araliphatischer und/oder aromatischer Diisocyanate mit einer mittleren NCO-Funktionalität von mindestens 2,1 und einem Gehalt an Isocyanatgruppen (berechnet als NCO; Molekulargewicht = 42) von 2,0 bis 24,0 Gew.-% eingesetzt werden, die durch Umsetzung von
a1) gegebenenfalls einer hydrophoben Polyisocyanatkomponente und
a2) einer hydrophil modifizierten Polyisocyanatkomponente mit
b) Alkoxysilanen der Formel (I)
Q-Z-SiXₙY₃₋ₙ (1)
in welcher
Q eine gegenüber Isocyanaten reaktive Gruppe,
X eine hydrolysierbare Gruppe,
Y gleiche oder verschiedene Alkylgruppen
Z eine C₁-C₁₂-Alkylengruppe und
n eine ganze Zahl von 1 bis 3 ist,
anschließendes Eindispergieren von
c) bevorzugt oberflächenmodifizierten anorganischen Partikeln einer mittels dynamischer Lichtstreuung in Teilchenzahlgewichtung bestimmten mittleren Partikelgröße von kleiner als 200 nm
und gegebenenfalls Zugabe von
d) Lösungsmittel
erhältlich sind..

4. Beschichtungsmittel gemäß Anspruch 3, **dadurch gekennzeichnet, dass** in a1) Polyisocyanate oder Polyisocyanatgemische mit ausschließlich aliphatisch und/oder cycloaliphatisch gebundenen Isocyanatgruppen eingesetzt werden.

5. Beschichtungsmittel gemäß Anspruch 3 oder 4, **dadurch gekennzeichnet, dass** in a2) hydrophil modifizierte Polyisocyanate eingesetzt werden, wenigstens umfassend ein hydrophobes Ausgangspolyisocyanate a1) sowie mindestens einem ionischen und/oder nichtionischen Emulgator e).

6. Beschichtungsmittel gemäß Anspruch 5, **dadurch gekennzeichnet, dass** als Emulgator e) Umsetzungsprodukte e1) der Polyisocyanate a1) mit hydrophilen Polyetheralkoholen eingesetzt werden.

7. Beschichtungsmittel gemäß Anspruch 5, **dadurch gekennzeichnet, dass** als Emulgator e) Umsetzungsprodukte e2) von monomeren Diisocyanaten oder Diisocyanatgemischen mit reinen Polyethylenglycolmonomethyletheralkoholen, die im statistischen Mittel 5 bis 50, bevorzugt 5 bis 25 Ethylenoxideinheiten aufweisen, eingesetzt werden.

8. Beschichtungsmittel gemäß Anspruch 5, **dadurch gekennzeichnet, dass** als Emulgator e) Umsetzungsprodukte e3) eingesetzt werden, wie sie durch Abmischen und Umsetzen der Polyetherurethan-Emulgatoren e2) mit den Polyisocyanaten a1) in Gegenwart von Katalysatoren unter Allophanatbildung erhalten werden.

9. Beschichtungsmittel gemäß Anspruch 5, **dadurch gekennzeichnet, dass** als Emulgator e) Umsetzungsprodukte e4) der Polyisocyanate a1) mit 2-(Cyclohexylamino)-ethansulfonsäure und/oder 3-(Cyclohexylamino)-propansulfonsäure eingesetzt werden.

10. Beschichtungsmittel gemäß Anspruch 5, **dadurch gekennzeichnet, dass** als Emulgator e) mit tertiären Aminen neutralisierte Alkylphenolpolyglykoletherphosphate, Alkylphenolpolyglykoletherphosphonate, Fettalkoholpolyglykoletherphosphate, Fettalkoholpolyglykoletherphosphonate, Alkylphenolpolyglykolethersulfate oder Fettalkoholpolyglykolethersulfate eingesetzt werden.

11. Beschichtungsmittel gemäß einem der Ansprüche 3 bis 10, **dadurch gekennzeichnet, dass** in b) solche Alkoxysilane gemäß Formel (I) eingesetzt werden, in der
X eine Alkoxy- oder Hydroxygruppe,
Y eine lineare oder verzweigte C₁-C₄-Alkylgruppe
Z eine lineare oder verzweigte C₁-C₄-Alkylengruppe und
Q eine gegenüber Isocyanaten unter Urethan-, Harnstoff- oder Thioharnstoffbildung reagierende Gruppe ist.

12. Beschichtungsmittel gemäß einem der Ansprüche 3 bis 11, **dadurch gekennzeichnet, dass** in c) anorganische Oxide, Mischoxide, Hydroxide, Sulfate, Carbonate, Carbide, Boride und Nitride von Elementen der II bis IV Hauptgruppe und/oder Elemente der I bis VIII Nebengruppe des Periodensystems einschlieBlich der Lanthanide verwendet werden.

13. Beschichtungsmittel gemäß einem der Ansprüche 3 bis 12, **dadurch gekennzeichnet, dass** die in c) eingesetzten Partikel oberflächenmodifiziert sind.

14. Beschichtungen erhältlich unter Verwendung von Beschichtungsmitteln gemäß einem der Ansprüche 1 bis 13.

## Claims

1. Coating composition comprising
A) from 10 to 90 wt.% of an aqueous, hydroxy- and/or amino-functional resin dispersion,
B) from 10 to 90 wt.% of a nanoparticle-modified polyisocyanate, and
C) from 0 to 60 wt.% of further auxiliary substances and additives known in lacquer technology,
the percentages being based on solids in the total composition.

2. Coating composition according to claim 1, **characterised in that** there are used in A) hydroxyfunctional resin dispersions which have, based on solid resin, a content of hydroxyl groups of from 0.5 to 7.0 wt.% and acid numbers of less than 50 mg KOH/g.

3. Coating composition according to claim 1 or 2, **characterised in that** there are used in B) nanoparticle-modified polyisocyanate mixtures based on aliphatic, cycloaliphatic, araliphatic and/or aromatic diisocyanates having a mean NCO functionality of at least 2.1 and a content of isocyanate groups (calculated as NCO; molecular weight = 42) of from 2.0 to 24.0 wt.%, which are obtainable by reaction of
a1) optionally a hydrophobic polyisocyanate component and
a2) a hydrophilically modified polyisocyanate component with
b) alkoxysilanes of formula (I)
Q-Z-SiXₙY₃₋ₙ (I)
in which
Q is a group reactive towards isocyanates,
X is a hydrolysable group,
Y is identical or different alkyl groups,
Z is a C₁-C₁₂-alkylene group and
n is an integer from 1 to 3,
subsequent dispersion therein of
c) preferably surface-modified inorganic particles having a mean particle size, determined by means of dynamic light scattering in particle number weighting, of less than 200 nm
and optionally addition of
d) solvents.

4. Coating composition according to claim 3, **characterised in that** there are used in a1) polyisocyanates or polyisocyanate mixtures having solely aliphatically and/or cycloaliphatically bonded isocyanate groups.

5. Coating composition according to claim 3 or 4, **characterised in that** there are used in a2) hydrophilically modified polyisocyanates at least comprising a hydrophobic starting polyisocyanate a1) as well as at least one ionic and/or non-ionic emulsifier e).

6. Coating composition according to claim 5, **characterised in that** there are used as emulsifier e) reaction products e1) of the polyisocyanates a1) with hydrophilic polyether alcohols.

7. Coating composition according to claim 5, **characterised in that** there are used as emulsifier e) reaction products e2) of monomeric diisocyanates or diisocyanate mixtures with pure polyethylene glycol monomethyl ether alcohols which contain, in the statistical mean, from 5 to 50, preferably from 5 to 25, ethylene oxide units.

8. Coating composition according to claim 5, **characterised in that** there are used as emulsifier e) reaction products e3) as are obtained by mixing and reacting the polyether urethane emulsifiers e2) with the polyisocyanates a1) in the presence of catalysts with allophanate formation.

9. Coating composition according to claim 5, **characterised in that** there are used as emulsifier e) reaction products e4) of the polyisocyanates a1) with 2-(cyclohexylamino)-ethanesulfonic acid and/or 3-(cyclohexylamino)-propanesulfonic acid.

10. Coating composition according to claim 5, **characterised in that** there are used as emulsifier e) alkylphenol polyglycol ether phosphates, alkylphenol polyglycol ether phosphonates, fatty alcohol polyglycol ether phosphates, fatty alcohol polyglyol ether phosphonates, alkylphenol polyglycol ether sulfates or fatty alcohol polyglycol ether sulfates neutralised with tertiary amines.

11. Coating composition according to any one of claims 3 to 10, **characterised in that** there are used in b) alkoxysilanes according to formula (I) in which
X is an alkoxy or hydroxy group,
Y is a linear or branched C₁-C₄-alkyl group,
Z is a linear or branched C₁-C₄-alkylene group, and
Q is a group that reacts with isocyanates to form urethane, urea or thiourea.

12. Coating composition according to any one of claims 3 to 11, **characterised in that** there are used in c) inorganic oxides, mixed oxides, hydroxides, sulfates, carbonates, carbides, borides and nitrides of elements of main groups II to IV and/or elements of subgroups I to VIII of the periodic system, including the lanthanides.

13. Coating composition according to any one of claims 3 to 12, **characterised in that** the particles used in c) have been surface-modified.

14. Coatings obtainable using coating compositions according to any one of claims 1 to 13.

## Revendications

1. Composition de revêtement comprenant
A) 10 à 90 % en poids d'une dispersion aqueuse de résine à fonction hydroxy et/ou amino,
B) 10 à 90 % en poids d'un polyisocyanate modifié avec des nanoparticules et
C) 0 à 60 % en poids d'autres adjuvants et additifs connus dans la technologie des peintures,
les pourcentages étant par rapport aux solides de la composition totale.

2. Composition de revêtement selon la revendication 1, **caractérisée en ce qu'**en A) on utilise des dispersions de résines à fonction hydroxy, qui présentent par rapport à la résine solide une teneur en groupes hydroxy de 0,5 à 7,0 % en poids et des indices d'acide de moins de 50 mg de KOH/g.

3. Composition de revêtement selon la revendication 1 ou 2, **caractérisée en ce qu'**en B) on utilise des mélanges de polyisocyanates modifiés avec des nanoparticules, 1 à base de diisocyanates aliphatiques, cycloaliphatiques, araliphatiques et/ou aromatiques, ayant une fonctionnalité NCO moyenne d'au moins 2,1 et une teneur en groupes isocyanate (calculée en tant que NCO ; masse moléculaire = 42) de 2,0 à 24,0 % en poids, qui peuvent être obtenus par mise en réaction
a1) éventuellement d'un composant polyisocyanate hydrophobe et
a2) d'un composant polyisocyanate à modification hydrophile avec
b) des alcoxysilanes de formule (I)
Q-Z-SiXₙY₃₋ₙ (I)
dans laquelle
Q est un groupe réactif vis-à-vis d'isocyanates,
X est un groupe hydrolysable ;
Y représente des groupes alkyle identiques ou différents,
Z est un groupe alkylène en C₁-C₁₂ et
n est un nombre entier valant de 1 à 3,
dispersion subséquente dans ceux-ci
c) de particules inorganiques de préférence modifiées en surface, ayant une taille moyenne de particule, déterminée en pondération en nombre de particules par diffusion dynamique de la lumière, de moins de 200 nm
et éventuellement addition de
d) solvant.

4. Composition de revêtement selon la revendication 3, **caractérisée en ce qu'**en a1) on utilise des polyisocyanates ou mélanges de polyisocyanates comportant exclusivement des groupes isocyanate en liaison aliphatique et/ou cycloaliphatique.

5. Composition de revêtement selon la revendication 3 ou 4, **caractérisée en ce qu'**en a2) on utilise des polyisocyanates à modification hydrophile, comprenant au moins un polyisocyanate hydrophobe a1) de départ ainsi qu'au moins un émulsifiant ionique et/ou non ionique e).

6. Composition de revêtement selon la revendication 5, **caractérisée en ce qu'**on utilise comme émulsifiant e) des produits de réaction e1) des polyisocyanates a1) avec des polyétheralcools hydrophiles.

7. Composition de revêtement selon la revendication 5, **caractérisée en ce qu'**on utilise comme émulsifiant e) des produits de réaction e2) de diisocyanates ou mélanges de diisocyanates monomères avec des polyéthylèneglycolmonométhyléther-alcools qui comportent en moyenne statistique 5 à 50, de préférence 5 à 25 motifs oxyde d'éthylène.

8. Composition de revêtement selon la revendication 5, **caractérisée en ce qu'**on utilise comme émulsifiant e) des produits de réaction e3), tels qu'ils sont obtenus par mélange et mise en réaction des émulsifiants polyétheruréthane e2) avec les polyisocyanates a1) en présence de catalyseurs, avec formation d'allophanates.

9. Composition de revêtement selon la revendication 5, **caractérisée en ce qu'**on utilise comme émulsifiant e) des produits de réaction e4) des polyisocyanates a1) avec de l'acide 2-(cyclohexyl-amino)-éthanesulfonique et/ou de l'acide 3-(cyclohexyl-amino)-propanesulfonique.

10. Composition de revêtement selon la revendication 5, **caractérisée en ce qu'**on utilise comme émulsifiant e) des polyglycolétherphosphates d'alkyl-phénols, polyglycolétherphosphonates d'alkylphénols, polyglycolétherphosphates d'alcools gras, polyglycolétherphosphonates d'alcools gras, polyglycoléthersulfates d'alkylphénols ou polyglycoléthersulfates d'alcools gras, neutralisés avec des amines tertiaires.

11. Composition de revêtement selon l'une quelconque des revendications 3 à 10, **caractérisée en ce qu'**en b) on utilise des alcoxysilanes selon la formule (I) dans laquelle
X est un groupe alcoxy ou hydroxy,
Y est un groupe alkyle en C₁-C₄ linéaire ou ramifié,
Z est un groupe alkylène en C₁-C₄ linéaire ou ramifié et
Q est un groupe réagissant vis-à-vis d'isocyanates avec formation de liaison uréthane, urée ou thiourée.

12. Composition de revêtement selon l'une quelconque des revendications 3 à 11, **caractérisée en ce qu'**en c) on utilise des oxydes, oxydes mixtes, hydroxydes, sulfates, carbonates, carbures, borures et nitrures inorganiques d'éléments des groupes IIA à IVA et/ou d'éléments des groupes IB à VIIIB du système périodique y compris des lanthanides.

13. Composition de revêtement selon l'une quelconque des revendications 3 à 12, **caractérisée en ce que** les particules utilisées en c) sont modifiées en surface.

14. Revêtements pouvant être obtenus avec utilisation de compositions de revêtement selon l'une quelconque des revendications 1 à 13.
